# FASCICULE DE BREVET EUROPEEN

(11) **EP 4 199 020 B1**
(45) Date de publication et mention de la délivrance du brevet: **22.10.2025**
(21) Numéro de dépôt: 22214074.1
(22) Date de dépôt: 16.12.2022
(51) Int. Cl.: H01H 9/28

(54) **UNITÉ DE PROTECTION POUR DES UNITÉS DE CONTRÔLE-COMMANDE D'UNE ARMOIRE ÉLECTRIQUE**
SCHUTZEINHEIT FÜR STEUER- UND BEDIENEINHEITEN EINES SCHALTSCHRANKS
PROTECTION UNIT FOR CONTROL-COMMAND UNITS OF AN ELECTRICAL CABINET

(30) Priorité: 17.12.2021 FR 2113920
(43) Date de publication de la demande: 21.06.2023
(73) Titulaire: SCHNEIDER ELECTRIC INDUSTRIES SAS, 92500 Rueil-Malmaison (FR)
(72) Inventeur: ORBAN, Rémy, 38410 Saint-Martin-d'Uriage (FR); BOUCHARD, Jean-Luc, 38100 Grenoble (FR); HERAUD, Sébastien, 38100 Grenoble (FR); NGUYEN, Eric, 38180 Seyssins (FR)
(74) Mandataire: Lavoix

(56) Documents cités:
- EP-A1- 0 161 946
- EP-A1- 0 610 143
- EP-A1- 3 322 052

## Description

La présente invention concerne une unité de protection, pour raccorder électriquement une alimentation électrique à des unités de contrôle-commande d'une armoire électrique, et concerne une armoire électrique comprenant une telle unité de protection.

L'invention se rapporte au domaine général de la protection électrique et de la consignation électrique, préférentiellement pour des installations industrielles.

Dans un contexte industriel, pour raccorder une alimentation électrique de puissance à des charges électriques, telles que des moteurs électriques ou autres machines, il est connu d'installer une armoire électrique de raccordement, avec une ou plusieurs unités de contrôle-commande, délivrant de la puissance électrique aux charges électriques, issue de l'alimentation électrique de puissance. Ces unités de contrôle-commande sont raccordés au sein de l'armoire à l'alimentation électrique de puissance et comprennent des éléments électroniques et/ou mécaniques pour fournir la puissance électrique aux charges électriques. Chaque unité de contrôle-commande se présente avantageusement sous la forme d'un tiroir.

Pour assurer une protection électrique des unités de contrôle-commande et des charges électriques, il est connu d'interposer une unité de protection, incluant par exemple un disjoncteur magnétothermique et/ou un sectionneur, entre l'alimentation électrique de puissance et les tiroirs de contrôle-commande. Outre les déclencheurs qu'elle embarque pour détecter les défauts électriques, cette unité de protection peut généralement être commandée manuellement par un technicien en face avant de l'armoire électrique, à l'aide d'une manette de commande.

En vue d'effectuer une intervention sur les tiroirs de contrôle-commande et/ou sur les charges électriques, il est souhaitable que le technicien puisse effectuer une consignation électrique de l'unité de protection. Grâce à la présence de la manette de commande, le technicien peut effectuer cette consignation électrique en positionnant la manette de commande dans une position où la manette force les contacts mobiles internes de l'appareil à être en position d'isolement, et en verrouillant la manette à l'aide d'un ou plusieurs cadenas. Alors, le technicien est assuré que les tiroirs de contrôle-commande et les charges sont hors tension pendant son intervention.

Toutefois, le progrès technologique conduit à envisager une unité de protection plus complexe et polyvalente pour effectuer la protection électrique, ce qui peut conduire à une absence de manette en face avant de l'armoire. Toutefois, cette absence de manette empêche d'effectuer une consignation électrique, qui est pourtant nécessaire pour protéger le technicien lors de son intervention.

Hors de ce contexte, EP 3 322 052 A1 décrit un sélecteur de mode de fonctionnement d'un sectionneur de mise à la terre. Le sectionneur comprend des contacts de puissance et un moteur pour les manœuvrer. Le sélecteur comprend une pluralité de positions correspondant respectivement à différents modes de fonctionnement du sectionneur de mise à la terre et comporte des cames dont la position est définie par la position du sélecteur, dont une première came qui entraine un premier organe de verrouillage destiné à bloquer mécaniquement le moteur du sectionneur de mise à la terre lorsque le sélecteur est dans l'une desdites positions, correspondant à un mode verrouillé fermé dans lequel le sectionneur de mise à la terre est fermé.

L'invention vise donc à répondre à ce problème en proposant une nouvelle unité de protection pour raccorder une alimentation électrique à des unités de contrôle commande, qui, tout en améliorant la polyvalence de la commutation de puissance, permet une mise en configuration de consignation fiable et aisée.

A cet effet, l'invention a pour objet une unité de protection, pour raccorder électriquement une alimentation électrique à des unités de contrôle-commande d'une armoire électrique, l'unité de protection comprenant un boîtier et au moins un appareil de commutation de puissance. Ledit au moins un appareil de commutation de puissance est disposé dans le boîtier et comprend : une entrée de puissance, configurée pour être électriquement connectée à l'alimentation électrique ; une sortie de puissance, destinée à être électriquement connectée aux unités de contrôle-commande ; et un commutateur mécanique, qui évolue entre une configuration de conduction, où le commutateur mécanique relie électriquement la sortie de puissance à l'entrée de puissance, et une configuration d'isolement, où le commutateur mécanique isole électriquement la sortie de puissance de l'entrée de puissance.

Selon l'invention, ledit au moins un appareil de commutation de puissance comprend un électro-actionneur, qui est configuré pour actionner le commutateur mécanique entre la configuration de conduction et la configuration d'isolement. Selon l'invention, l'unité de protection comprend en outre : une unité de commande électronique, qui est disposée dans le boîtier et qui est configurée pour commander ledit au moins un appareil de commutation de puissance, en commandant électriquement l'électro-actionneur ; un appareil de commutation auxiliaire, qui est disposé dans le boîtier et qui comprend une entrée auxiliaire, pour être électriquement connecté à l'alimentation électrique, une sortie auxiliaire, pour être électriquement connecté à l'unité de commande électronique, et une commande mécanique, pour faire basculer l'appareil de commutation auxiliaire entre une configuration de conduction, où la sortie auxiliaire est électriquement reliée à l'entrée auxiliaire, et une configuration d'isolement, où la sortie auxiliaire est électriquement isolée de l'entrée auxiliaire ; et un système de consignation, qui comprend un verrou, qui est mobile par rapport au boîtier. Le système de consignation est configuré pour évoluer entre : une configuration de consignation, dans laquelle le verrou est positionné dans une position de consignation et maintient mécaniquement le commutateur mécanique dudit au moins un appareil de commutation de puissance en configuration d'isolement et maintient mécaniquement l'appareil de commutation auxiliaire en configuration d'isolement ; et une configuration de fonctionnement, dans laquelle le verrou est positionné de façon à autoriser le commutateur mécanique dudit au moins un appareil de commutation de puissance à évoluer entre la configuration d'isolement et la configuration de conduction et autorise l'appareil de commutation auxiliaire à évoluer entre la configuration de conduction et la configuration d'isolement.

Une idée à la base de l'invention est de prévoir que, en configuration de fonctionnement, ledit au moins un appareil de commutation de puissance est commandé électroniquement par l'unité de commande électronique. Comparativement à une commande électromécanique classique, la commande électronique est plus polyvalente et personnalisable, car le déclenchement de la commutation peut être piloté en fonction d'évènements, de paramètres, de scénarios et d'informations particulièrement variés. La commande du ou des appareils de commutation de puissance par l'unité de commande électronique peut par exemple être effectuée sur la base d'un programme exécuté par l'unité de commande électronique, tenant compte de données variées, par exemple issues de capteurs installés dans de l'unité de protection, les unités de contrôle-commande, les charges électriques raccordées aux unités de contrôle-commande, et/ou ailleurs. Un pilotage à distance de l'unité de commande électronique est également envisageable.

Toutefois, grâce à l'invention, cette commande électronique dudit au moins un appareil de commutation de puissance est effectuée sans préjudice à la sécurité du technicien qui souhaite intervenir en aval de l'unité de protection, notamment au niveau des unités de contrôle-commande ou des charges électriques qui y sont éventuellement connectées. En effet, le système de consignation de l'invention permet la mise en configuration de consignation où, simultanément, le verrou coupe l'alimentation électrique en mettant ledit au moins un appareil de commutation de puissance en configuration d'isolement et désactive l'unité de commande électronique en agissant sur l'appareil de commutation auxiliaire. Ainsi, en configuration de consignation, il n'y a pas de risque que l'unité de commande électronique puisse commander une mise en configuration de conduction du commutateur mécanique dudit au moins un appareil de commutation de puissance. Inversement, il n'y a pas de risque que le commutateur mécanique soit en configuration de conduction par ailleurs. En particulier, il n'y a pas de risque d'effectuer une consignation de l'unité de commande électronique sans effectuer une consignation du commutateur mécanique, et vice-versa, puisque ces deux consignations sont obligatoirement effectuées toutes les deux par mise en position de consignation du verrou.

De préférence, en configuration de fonctionnement, ledit au moins un appareil de commutation de puissance empêche mécaniquement le verrou d'être mis en position de consignation, lorsque le commutateur mécanique est en configuration de conduction, et autorise mécaniquement le verrou à être mis en position de consignation, lorsque le commutateur mécanique est en configuration d'isolement.

De préférence, le système de consignation comprend un coulisseau, qui est disposé dans le boîtier et qui est coulissant par rapport au boîtier suivant un axe principal fixe par rapport au boîtier. De préférence, en configuration de consignation, pour maintenir mécaniquement le commutateur mécanique dudit au moins un appareil de commutation de puissance en configuration d'isolement, le verrou maintient le coulisseau dans une position de retenue par rapport au boîtier, dans laquelle le coulisseau maintenant mécaniquement le commutateur mécanique en configuration d'isolement. De préférence, en configuration de fonctionnement, le coulisseau est entraîné par le commutateur mécanique dudit au moins un appareil de commutation de puissance, entre : une position d'empêchement, lorsque le commutateur mécanique est en configuration de conduction, où le verrou est empêché d'être mis en position de consignation, et une position d'autorisation, lorsque le commutateur mécanique est en configuration d'isolement, où le verrou est autorisé à être mis en position de consignation.

De préférence, le verrou est pivotant par rapport au coulisseau autour de l'axe principal, entre une orientation de consignation, lorsque le verrou est en position de consignation, et une orientation de déconsignation, adoptée en configuration de fonctionnement. De préférence, le coulisseau et le verrou comprennent des butées axiales, qui sont disposées de sorte à : être en regard l'une de l'autre parallèlement à l'axe principal lorsque le verrou est dans la position de consignation, pour que, en configuration de consignation, le verrou retienne le coulisseau en position de retenue par mise en butée des butées axiales ainsi en regard ; et être décalées l'une par rapport à l'autre autour de l'axe principal lorsque le verrou est dans l'orientation de déconsignation, pour que, en configuration de fonctionnement, le verrou autorise le coulisseau à être déplacé entre la position d'empêchement et la position d'autorisation.

De préférence, le verrou et le coulisseau comprennent des butées de rotation, qui sont disposées de sorte à : être à même hauteur le long de l'axe principal, lorsque le système de consignation est en configuration de fonctionnement avec le coulisseau en position d'empêchement, pour que le coulisseau maintienne le verrou dans l'orientation de déconsignation par mise en butée des butées de rotation ; et être à hauteur différente le long de l'axe principal, lorsque le système de consignation est en configuration de consignation, pour que le coulisseau autorise le verrou à être pivoté entre l'orientation de consignation et l'orientation de déconsignation.

De préférence, le verrou est fixe en translation suivant l'axe principal, par rapport au boîtier.

De préférence, le système de consignation comprend un ressort de coulisseau, qui exerce un effort élastique sur le coulisseau, en prenant appui sur le boîtier, tendant à déplacer le coulisseau vers la position d'empêchement, lorsque le coulisseau est en position de retenue.

De préférence, le verrou comprend une rampe, qui est configurée pour actionner la commande mécanique de l'appareil de commutation auxiliaire, pour mettre l'appareil de commutation auxiliaire en configuration d'isolement, lorsque le verrou est en position de consignation et qui est configurée pour ne pas actionner la commande mécanique lorsque le système de consignation est en configuration de fonctionnement.

De préférence, le verrou comprend un orifice de consignation et le système de consignation comprend un système de masquage, qui est configuré pour : autoriser l'orifice de consignation à recevoir un cadenas, lorsque le système de consignation est en configuration de consignation ; et masquer l'orifice de consignation lorsque le système de consignation est en configuration de fonctionnement, pour empêcher l'orifice de consignation de recevoir le cadenas.

De préférence, le verrou comprend une partie externe, qui : en configuration de fonctionnement avec le coulisseau en position d'empêchement, est escamotée à l'intérieur du boîtier pour empêcher le verrou d'être mis en position de consignation ; et en configuration de fonctionnement avec le coulisseau en position d'autorisation et en configuration de consignation, dépasse hors du boîtier pour autoriser le verrou (250) à être mis en position de consignation.

De préférence, lorsque le verrou est dans l'orientation de déconsignation, le verrou est coulissant par rapport au boîtier et au coulisseau suivant l'axe principal. De préférence, par rapport au coulisseau, le verrou coulisse entre une hauteur initiale, adoptée en configuration de fonctionnement, et une hauteur de consignation, adoptée en configuration de consignation, le verrou étant à la hauteur de consignation lorsque le verrou est en position de consignation. De préférence, le système de consignation comprend un ressort de verrou, qui exerce un effort élastique sur le verrou, en prenant appui sur le coulisseau, tendant à déplacer le verrou vers la hauteur initiale lorsque le verrou est à la hauteur de consignation. Le verrou et le boîtier comprennent des butées axiales, qui sont disposées de sorte à : être en regard l'une de l'autre parallèlement à l'axe principal lorsque le verrou est dans la position de consignation, pour que, en configuration de consignation, le boîtier retienne le verrou en position de retenue par mise en butée parallèle à l'axe principal des butées axiales ainsi en regard ; et être décalées l'une par rapport à l'autre autour de l'axe principal lorsque le verrou est dans l'orientation de déconsignation, pour que, en configuration de fonctionnement, le boîtier autorise le verrou à être déplacé entre la hauteur de consignation et la hauteur initiale.

L'invention a également pour objet une armoire électrique, comprenant l'unité de protection les unités de contrôle-commande, raccordées électriquement à la sortie de puissance dudit au moins un appareil de commutation de puissance.

L'invention sera mieux comprise et d'autres avantages de celle-ci apparaitront plus clairement à la lumière de la description qui suit de modes de réalisation de l'invention, la description étant donnée uniquement à titre d'exemple et faite en référence aux dessins annexés présentés ci-après.
[FIG 1] La figure 1 est une vue de face schématique d'une armoire électrique selon un premier mode de réalisation de l'invention.
[FIG 2] La figure 2 est une vue en perspective d'une unité de protection appartenant à l'armoire de la figure 1.
[FIG 3] La figure 3 est une vue en perspective de l'unité de protection de la figure 2, sous un autre angle.
[FIG 4] La figure 4 est une vue de côté montrant l'intérieur de l'unité de protection des figures précédentes, dans une configuration de fonctionnement, avec des contacts mécaniques en configuration de conduction et un coulisseau en position d'empêchement.
[FIG 5] La figure 5 montre un détail A et un détail B de la figure 4.
[FIG 6] La figure 6 est une vue en perspective partielle d'un verrou et du coulisseau dans la configuration des figures 4 et 5.
[FIG 7] La figure 7 montre le détail A et le détail B, où l'unité de protection est dans une configuration de fonctionnement, avec les contacts mécaniques en configuration d'isolement et le coulisseau en position d'autorisation.
[FIG 8] La figure 8 est une vue en perspective partielle du verrou et du coulisseau dans la configuration de la figure 7.
[FIG 9] La figure 9 montre le détail A et le détail B, où l'unité de protection est dans une configuration de consignation, avec les contacts mécaniques en configuration d'isolement, le coulisseau en position de retenue et le verrou en position de consignation.
[FIG 10] La figure 10 est une vue en perspective partielle du verrou et du coulisseau dans la configuration de la figure 9.
[FIG 11] La figure 11 est une vue en perspective partielle du verrou.
[FIG 12] La figure 12 est une vue en perspective d'un système de masquage du verrou.
[FIG 13] La figure 13 est une vue de côté montrant l'intérieur d'une unité de protection selon un deuxième mode de réalisation de l'invention, dans une configuration de fonctionnement, avec les contacts mécaniques en configuration de conduction et le coulisseau en position d'empêchement.
[FIG 14] La figure 14 montre un détail A et un détail B de la figure 13, alors que l'unité de protection est dans une configuration de fonctionnement, avec les contacts mécaniques en configuration d'isolement et le coulisseau en position d'autorisation.
[FIG 15] La figure 15 montre le détail A et le détail B alors que l'unité de protection est dans une configuration intermédiaire, avec les contacts mécaniques en configuration d'isolement, le coulisseau en position de retenue et le verrou dans une orientation de déconsignation.
[FIG 16] La figure 16 montre le détail A alors que l'unité de protection est dans une configuration de consignation, avec les contacts mécaniques en configuration d'isolement, le coulisseau en position de retenue et le verrou en position de consignation.
[FIG 17] La figure 17 est une coupe longitudinale d'une partie du coulisseau et du verrou dans la configuration de la figure 16.

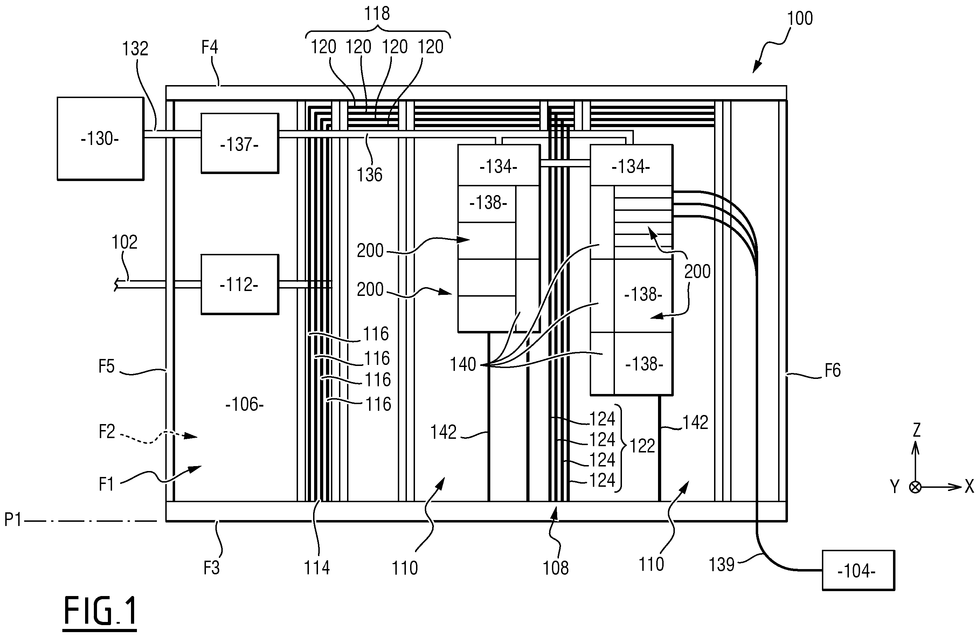

Une armoire électrique 100 est représentée sur la figure 1. Cette armoire électrique est destinée à être intégrée à un réseau électrique partiellement représenté. Ce réseau électrique comprend d'une part, en amont de l'armoire électrique 100, des câbles d'alimentation 102 provenant par exemple d'un poste de transformation et d'autre part, en aval de l'armoire électrique, une ou plusieurs charges électriques 104. L'armoire électrique 100 peut être qualifiée d'armoire de raccordement, en ce qu'elle vise à raccorder les charges électriques 104 aux câbles d'alimentation 102.

En configuration installée de l'armoire électrique 100, l'armoire repose sur une surface horizontale représentée par un plan P1. En pratique, le plan P1 est par exemple le sol d'un bâtiment dans lequel l'armoire électrique 100 est installée.

On définit une direction X de l'armoire électrique 100 comme orientée suivant la plus grande dimension de l'armoire électrique 100, en pratique sa largeur. On définit une direction Y, orientée suivant la plus petite dimension de l'armoire électrique 100 et perpendiculaire à la direction X, en pratique sa profondeur. On définit une direction Z, orientée perpendiculairement aux directions X et Y, la direction Z étant orientée selon la hauteur de l'armoire. L'orientation des directions X, Y et Z est liée fixement à l'orientation de l'armoire électrique 100.

Dans la configuration installée ici décrite, un plan perpendiculaire à la direction Z est horizontal et parallèle au plan P1, alors que la direction Z est orientée vers le haut. Le qualificatif « horizontal » utilisé dans la suite de l'exposé s'applique à tout élément contenu dans un plan perpendiculaire à la direction Z, en configuration installée de l'armoire électrique 100. Les qualificatifs « gauche » et « droite » s'entendent suivant la direction X et les qualificatifs « avant » et « arrière » s'entendent suivant la direction Y.

L'armoire comprend une face avant F1 ou façade et une face arrière F2, opposées et perpendiculaires à la direction Y, une face inférieure F3 et une face supérieure F4, opposées et perpendiculaires à la direction Z, ainsi qu'une face de gauche F5 et une face de droite F6, opposées et perpendiculaires à la direction X. Ces faces F1 à F6 sont globalement planes et disposées en parallélépipède. Ces faces F1 à F6 constituent une enveloppe extérieure de l'armoire. La face F3 est disposée sur le plan P1.

Les câble d'alimentation 102 délivrent à l'armoire électrique 100 une alimentation électrique principale, de préférence d'une tension de 400V triphasée avec neutre, de préférence à une fréquence 50Hz. En variante, le câble d'alimentation 102 délivre un courant triphasé sans neutre, ou un courant monophasé.

Les charges électriques 104 sont préférentiellement des moteurs électriques, tels que des moteurs triphasés. Par exemple, le moteur électrique peut requérir une puissance électrique nominale entre 5 et 100 kW. En variante, tout ou partie des charges électriques 104 peuvent être d'autres types de machines électriques ou des réseaux de distribution d'électricité.

Comme visible à la figure 1, l'armoire électrique 100 comprend une colonne d'alimentation 106, au moins une colonne de distribution électrique 108 et au moins une colonne de raccordement 110. Les colonnes d'alimentation 106, de distribution 108 et de raccordement 110 sont juxtaposées selon la direction X.

Dans l'exemple représenté, l'armoire électrique 100 comprend une colonne de distribution électrique 108 et deux colonnes de raccordement 110, disposées de part et d'autre de la colonne de distribution électrique 108. En pratique, une colonne de raccordement 110 est toujours juxtaposée à une colonne de distribution électrique 108. Une colonne de distribution électrique 108 est toujours juxtaposée à une ou à deux colonnes de raccordement 110.

L'association d'une colonne de distribution électrique 108 et d'une ou de deux colonnes de raccordement 110 forme une colonne fonctionnelle. Lorsqu'une colonne fonctionnelle comprend deux colonnes de raccordement 110, ces deux colonnes sont situées respectivement de part et d'autre, à savoir à gauche et à droite de la colonne de distribution électrique 108. Lorsqu'une colonne fonctionnelle comprend une seule colonne de raccordement 110, cette colonne est située indifféremment, d'un côté ou de l'autre, à savoir à gauche ou à droite de la colonne de distribution électrique 108. Dans l'exemple illustré, l'armoire électrique 100 comprend une seule colonne fonctionnelle. En variante, l'armoire électrique comprend plusieurs colonnes fonctionnelles, juxtaposées selon la direction X.

La colonne d'alimentation 106 permet d'alimenter l'ensemble de l'armoire électrique 100 en énergie électrique à partir du câble d'alimentation 102. De préférence, la colonne d'alimentation est disposée à une extrémité longitudinale de l'armoire 100 suivant la direction X, comme dans l'exemple représenté, où la colonne d'alimentation est à gauche de l'armoire 100.

Comme visible à la figure 1, dans la colonne d'alimentation 106, chaque phase et le neutre du câble d'alimentation 102 sont raccordés à une entrée respective d'un appareil de protection 112, tel qu'un disjoncteur, appartenant à la colonne d'alimentation 106.

Dans l'exemple, la colonne d'alimentation 106 comprend également un jeu de barres d'alimentation 114, comprenant plusieurs barres d'alimentation 116, ici verticales. Chaque sortie de l'appareil de protection 112 est respectivement reliée à l'une des barres d'alimentation 116. Ainsi, dans l'exemple où l'armoire électrique 100 est alimentée en courant triphasé avec neutre, le jeu de barres 114 de la colonne 106 comprend quatre barres d'alimentation 116, correspondant aux trois phases et au neutre du courant d'alimentation.

Le jeu de barres d'alimentation 114 est raccordé à un jeu de barres d'alimentation 118. Le jeu de barres 118 comprend plusieurs barres d'alimentation 120, orientées parallèlement à la direction X et agencées à l'extrémité haute de l'armoire 100. Les barres 118 prolongent respectivement les barres 114. Le jeu de barres 118 permet d'alimenter chaque colonne de distribution électrique 108 de l'armoire 100.

Chaque colonne de distribution électrique 108 comprend un jeu de barres d'alimentation 122, avec plusieurs barres d'alimentation 124, qui dérivent respectivement des barres 120 du jeu de barres 118 pour alimenter la colonne 108. Les barres 124 sont ici verticales et alimentent la ou chaque colonne de raccordement 110 adjacente la colonne de distribution électrique 108 concernée.

En fonction de la puissance électrique à délivrer, les barres 116, 120 et 124 sont en matériau électriquement conducteur, par exemple en cuivre, et présentent par exemple une section comprise entre 250 et 3000 mm². On prévoit que les câbles d'alimentation 102 sont dimensionnées de la même façon.

L'appareil 112 et les barres 116, 120 et 124 constituent une alimentation électrique de puissance de l'armoire 100. L'appareil de protection 112, électriquement interposé entre les barres 116 et les câbles 102, permet donc de couper l'alimentation électrique de puissance de l'armoire 100, en cas de défaut électrique et/ou sur commande.

Chaque colonne de raccordement 110 permet le raccordement électrique d'une ou de plusieurs charges électriques 104 à l'armoire électrique 100 et permet de commander et/ou contrôler les charges électriques 104 qui y sont raccordées.

L'armoire électrique 100 est contrôlée par un ordinateur industriel 130, préférentiellement disposé hors de l'armoire 100 en étant relié à l'armoire 100 par des câbles de communication 132. Cet ordinateur industriel permet de commander en particulier les colonnes de raccordement 110. De préférence, l'ordinateur industriel 130 comprend une unité de calcul non-représentée qui exécute un logiciel de gestion de l'armoire électrique 100.

En variante, l'ordinateur industriel 130 est remplacé par un système de contrôle et d'acquisition de données en temps réel, dit « SCADA », qui supervise le fonctionnement de l'armoire électrique 100, ou l'ordinateur est intégré dans un tel système.

Chaque colonne de raccordement 110 comprend un module de communication 134. Par exemple, le module de communication 134 est positionné à proximité de l'extrémité haute de la colonne de raccordement 110. Le module de communication 134 permet de centraliser l'ensemble des informations provenant de la colonne de raccordement 110 et de commander la colonne de raccordement 110.

Le module de communication 134 communique avec l'ordinateur industriel 130 par l'intermédiaire des câbles de communication 132, d'une part pour transmettre des informations sur le fonctionnement de la colonne de raccordement 110 et d'autre part pour recevoir les commandes provenant de l'ordinateur industriel 130 et devant être transmises à la colonne de raccordement 110. Le module de communication 134 d'une colonne de raccordement 110 fait donc l'intermédiaire entre l'ordinateur industriel 130 et cette colonne de raccordement 110 et permet de centraliser les échanges entre l'ordinateur 130 et la colonne 110.

Chaque module de communication comporte en pratique un commutateur réseau contrôlé, dit « switch managé ». Lorsque l'armoire électrique 100 comprend plusieurs colonnes de raccordement 110, comme dans l'exemple de la figure 1, les modules de communication 134 de chaque colonne de raccordement sont reliés entre eux par des câbles de communication interne 136. En pratique, ce sont les switchs managés des modules de communication qui sont reliés entre eux par les câbles de communication interne 136. De préférence, les switchs managés des modules de communication 134 sont tous reliés à un commutateur central 137 par les câbles de communication interne 136, le commutateur central 137 étant disposé de préférence dans la colonne d'alimentation 106. Ce commutateur central 137 fait l'intermédiaire entre les modules de communication 134 et l'ordinateur industriel 130, c'est-à-dire que les informations provenant de l'ordinateur industriel 130, par exemple des commandes, sont réparties entre les modules de communication par le commutateur central 137 et que les informations provenant des modules de communication 134 sont agrégées par le commutateur central avant d'être transmises à l'ordinateur industriel. Ainsi, chaque switch managé est relié à l'ordinateur industriel 130, indépendamment des autres switch managés.

En variante, lorsque l'armoire électrique 100 comprend plusieurs colonnes de raccordement 110, le switch managé de chaque module de communication 134 est directement relié à l'ordinateur industriel, sans passer par un commutateur du type du commutateur 137.

Par exemple, les câbles de communication interne 136 sont des câbles utilisant le protocole Ethernet. En variante, les câbles de communication interne 136 utilisent un autre protocole de réseau local, comme par exemple le protocole MODBUS ou PROFINET.

Comme visible sur la figure 1, pour permettre le raccordement des charges électriques 104, chaque colonne de raccordement 110 un ou plusieurs modules de contrôle-commande 200. Chaque module de contrôle-commande 200 comprend une unité de protection 140 et une ou plusieurs unités de contrôle-commande 138. Chaque charge électrique 104 est électriquement raccordée à l'une des unités 138. De préférence, une face de chaque module de communication 134, de chaque unité de contrôle-commande 138 et de chaque unité de protection 140 est accessible depuis l'extérieur par la face avant F1.

Dans l'exemple représenté, une colonne de raccordement 110 comporte jusqu'à cinq module 200, chaque module comportant une seule unité 140 et jusqu'à six unités 138. On a donc jusqu'à cinq unités de protection 140 et jusqu'à trente unités de contrôle-commande 138 par colonne 110. On peut toutefois prévoir un nombre maximal d'unités différent pour chaque colonne 110. La colonne de raccordement 110 est avantageusement modulable, c'est-à-dire qu'il est possible d'y installer autant de modules 200 que souhaité et, au sein de chaque module 200, autant d'unités 138 que souhaité. Les modules 200 sont juxtaposés suivant la direction Z, sous le module de communication 134. Les unités de protection 140 sont juxtaposées suivant la direction Z dans la colonne de raccordement 110. En étant adjacentes aux unités 140 suivant la direction X, les unités 138 sont juxtaposées suivant la direction Z dans la colonne de raccordement 110. Suivant la direction X, les unités 140 sont disposées entre les unités 138 et la colonne de distribution 108.

De préférence, une face de chaque module de communication 134, de chaque unité de contrôle-commande 138 et de chaque unité de protection 140 est accessible depuis l'extérieur par la face avant F1.

Dans l'exemple représenté, les unités de protection 140 sont des tiroirs de protection qui peuvent donc être installés dans, et retirés de, la colonne de raccordement 110 de façon simple et rapide. En variante, les unités 140 sont des unités fixes de l'armoire 100, qui sont assemblées lors de l'installation de l'armoire, par exemple par vissage dans la ou les colonnes 110.

Chaque unité de protection 140 est configurée pour raccorder électriquement une ou plusieurs unités 138 à l'alimentation électrique de puissance, pour que ces unités 138 fournissent une alimentation de puissance à ces charges 104, issue de cette alimentation électrique de puissance. Autrement dit, chaque unité 138 est raccordée à l'alimentation électrique de puissance par l'intermédiaire d'une seule unité de protection 140. L'unité de protection 140 distribue l'alimentation électrique de puissance à une ou plusieurs unités 138. Chaque unité de protection 140 est également configurée pour protéger électriquement la ou les unités 138 qu'elle raccorde à l'alimentation électrique de puissance, en isolant les unités 138 de l'alimentation électrique de puissance lorsque cela est nécessaire.

Etant adjacente à la colonne 108, chaque unité de protection 140 est électriquement raccordée à l'alimentation électrique de puissance par le jeu de barre 122, qui distribue l'alimentation électrique de puissance à toutes les unités 140 de cette colonne 110. Les unités de protection 140 raccordent électriquement les unités de contrôle-commande 138 de la même colonne 110 à partir dudit jeu de barres 122, fournissant l'alimentation électrique de puissance.

Dans l'exemple représenté, les unités de contrôle-commande 138 sont des tiroirs de contrôle-commande qui peuvent donc être installés dans, et retirés de, la colonne de raccordement 110 de façon simple et rapide. En variante, les unités de contrôle-commande 138 sont des unités fixes de l'armoire, qui sont assemblées lors de l'installation de l'armoire, par exemple par vissage dans la ou les colonnes 110.

De préférence, chaque unité de contrôle-commande 138 est raccordée à une seule charge électrique 104 respective. On pourrait toutefois prévoir que chaque unité 138 est raccordée à plusieurs charges 104.

En raccordant la charge 104, l'unité de contrôle-commande 138 fournit une alimentation électrique de puissance à la charge 104, qui est issue de l'alimentation électrique de puissance fournie par l'unité 140 à l'unité 138.

Les unités de contrôle-commande 138 ont pour fonction de commander des charges électriques 104 qui y sont raccordées. Cette commande comprend, par exemple, lorsque la charge électrique est un moteur, de piloter ce moteur, c'est-à-dire le démarrer, l'arrêter et éventuellement contrôler sa vitesse et/ou son couple. Selon un autre exemple, lorsque la charge électrique est un réseau de distribution, la commande comprend de délivrer la tension et l'intensité nécessaire au bon fonctionnement de ce réseau de distribution.

En outre, les unités de contrôle-commande 138 permettent également un contrôle, c'est-à-dire une surveillance des charges électriques 104 qui y sont raccordées. Ce contrôle consiste par exemple à mesurer des grandeurs électrique concernant l'alimentation électrique délivrée à la charge 104, par exemple concernant l'intensité du courant, la tension et/ou la fréquence, ou encore à récupérer des informations provenant de capteurs équipant les charges 104, ou placés à proximité des charges 104, tels que par exemple des capteurs de position, de vitesse de rotation et de température, ou encore des capteurs pour mesurer des grandeurs électriques, telles qu'une tension, une intensité ou une fréquence, reçue par les charges 104. Les informations sur la charge 104 issues du contrôle permettent avantageusement à l'unité 138 d'effectuer un pilotage de la charge 104, c'est-à-dire une commande tenant compte du contrôle.

Ainsi, chaque unité de contrôle-commande 138 peut avoir un rôle de raccordement d'une charge électrique 104, de commande de cette charge et de contrôle de cette charge. Toutefois, selon le type de charge électrique 104 raccordée à l'unité de contrôle-commande 138, cette unité 138 peut ne pas avoir de rôle de commande de cette charge, ou peut ne pas avoir de rôle de contrôle de la charge.

Les charges électriques 104 étant distantes de l'armoire 100, leur raccordement aux unités de contrôle-commande 138 s'effectue par l'intermédiaire de câbles de raccordement 139.

Dans le cas préférentiel où la charge 104 est un moteur électrique, l'unité 138 comprend avantageusement, pour commander et contrôler la charge électrique 104, au moins un contacteur, un relai de protection thermique, des capteurs de fonctionnement de l'unité 138, et des composants électroniques configurés pour collecter des signaux provenant de capteurs de fonctionnement de la charge électrique 104, disposés sur, ou à proximité de, la charge électrique 104, tels que par exemple des sondes de température ou des capteurs de vitesse.

Le relai de protection thermique est par exemple un relai électromécanique à bilame ou encore un relai électronique, qui a pour rôle de protéger la charge 104 alimentée par l'unité 138 d'éventuelles surcharges pouvant se produire notamment au démarrage, si la charge 104 est un moteur électrique. Les capteurs sont par exemple des capteurs de tension, mesurant la tension de l'alimentation électrique émanant de l'unité de protection 140.

Pour effectuer la commande de la charge 104, l'unité de contrôle-commande 138 embarque avantageusement des convertisseurs de puissance, des variateurs de fréquence, et/ou d'autre composants de conversion de l'alimentation électrique de puissance fournie par l'unité 140 en une alimentation électrique transformée, pour alimenter en puissance et commander la charge 104.

Comme visible à la figure 1, chaque colonne de raccordement 110 comprend avantageusement un bus informatique 142. Pour chaque colonne 110, le bus 142 relie le module de communication 134 à l'ensemble des modules 200, en particulier aux unités 138 et 140. Chaque unité de protection 140 et chaque unité de contrôle-commande 138 est donc connectée au module de communication 134 équipant la colonne 110.

Le bus informatique 142 se présente par exemple sous la forme d'un boîtier comprenant une carte électronique, c'est-à-dire un circuit imprimé, de forme allongée, disposée verticalement dans la colonne de raccordement 110. Cette carte électronique comporte des circuits électroniques, ou pistes, permettant la communication, c'est-à-dire l'échange de données, dans la colonne 110, par exemple selon le protocole Ethernet, entre le switch managé du module de communication 134 et les unités 138 et 140. Grâce au bus informatique 142, le module de communication 134 commande et contrôle chaque unité de protection 140 et chaque unité de contrôle-commande 138 de la colonne 110.

Le bus informatique 142 fournit également une alimentation électrique auxiliaire aux unités 138 de la colonne 110, en comportant par exemple des pistes d'alimentation électrique. L'alimentation électrique auxiliaire est avantageusement fournie par le module de communication 134, qui comprend par exemple un bloc d'alimentation ou plusieurs blocs d'alimentation redondants. Pour fournir cette alimentation électrique auxiliaire, on prévoit par exemple que l'armoire 100 est alimentée par une source externe d'alimentation électrique auxiliaire. En variante, on peut prévoir que l'armoire 100 dispose de moyens de conversion électrique, disposés par exemple dans la colonne 106, pour dériver l'alimentation électrique auxiliaire à partir de l'alimentation électrique de puissance, par exemple en aval de l'appareil 112. L'alimentation électrique auxiliaire est par exemple une tension électrique continue de 48V. En variante, la tension auxiliaire a une valeur différente, par exemple 12V, 24V, 110V en courant continu ou 110V en courant alternatif. En variante, l'alimentation électrique auxiliaire forme une alimentation multiple, en délivrant plusieurs tensions différentes destinées à différents systèmes équipant les unités 138 et 140.

En variante, le bus informatique 142 pourrait se présenter sous la forme d'un faisceau de câbles pour assurer la communication et l'alimentation électrique auxiliaire.

L'unité 138 comprend avantageusement une unité de commande électronique, par exemple sous la forme d'une carte électronique de commande. La carte électronique de commande est reliée au module de communication 134 de la colonne 110 via le bus 142. La carte électronique de commande permet de commander et contrôler les éléments foncitonnels de l'unité 138, à savoir le ou les contacteurs, le relai de protection thermique, les capteurs de fonctionnement, et les composants électroniques et/ou les convertisseurs. La carte électronique regroupe les informations provenant des capteurs de fonctionnement et les informations provenant des composants électroniques configurés pour collecter des signaux provenant des capteurs de fonctionnement de la charge électrique 104, avant de les analyser et de les transmettre au module de communication 134. En fonction de cette analyse des informations provenant des capteurs de fonctionnement du tiroir et de la charge électrique, la carte électronique peut adapter sa commande des éléments fonctionnels, par exemple en donnant l'ordre au contacteur d'interrompre l'alimentation de la charge électrique lorsqu'un capteur de fonctionnement remonte un dysfonctionnement de la charge électrique.

Ainsi, grâce aux éléments fonctionnels et à la carte électronique, chaque unité 138 alimente, commande et contrôle la charge électrique 104. Chaque unité 138 a donc simultanément un rôle d'alimentation, de commande et de contrôle de la charge électrique 104. La carte électronique et les éléments fonctionnels de l'unité 138 sont alimentés par l'alimentation électrique auxiliaire pour leur fonctionnement.

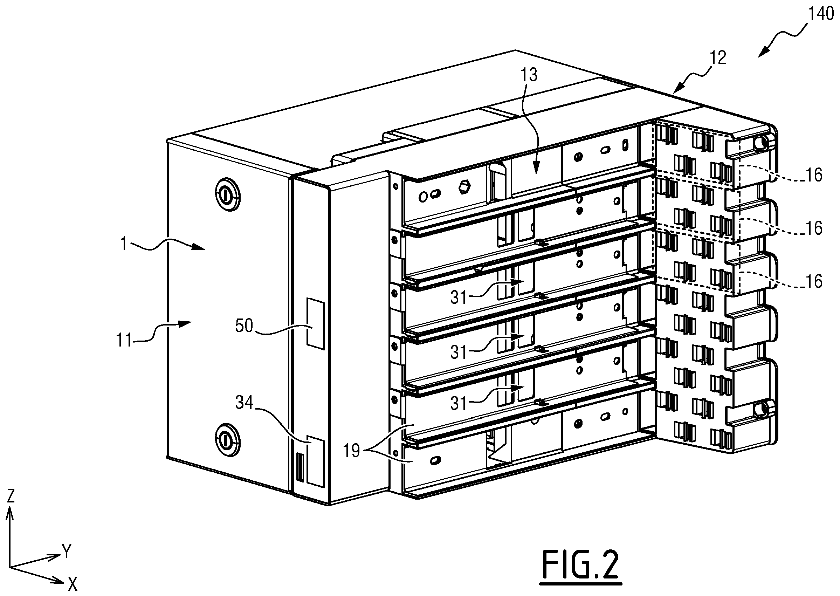

L'une des unités de protection 140 est représentée plus en détails aux figures 2 à 12.

L'unité de protection 140 comprend un boîtier 1. On définit un axe principal Y1, parallèle à la direction Y et fixe par rapport au boîtier 1. L'unité 140 est fixée à l'armoire par l'intermédiaire de son boîtier 1. Les unités de contrôle commande 138 et les charges 104 sont disposées hors du boîtier 1.

Par exemple, le boîtier 1 forme une face avant 11 ou façade et une face arrière 12, opposées et perpendiculaires à la direction Y et traversées par l'axe Y1. Le boîtier 1 forme aussi une face intérieure 13 et une face extérieure 14, opposées et parallèles à l'axe Z. Les faces 13 et 14 relient entre elles les faces 11 et 12. Le boîtier 1 forme enfin une face supérieure et une face inférieure, opposées et parallèles à la direction X, reliant entre elles les faces 11 et 12 parallèlement à la direction Y, et reliant entre elles les faces 13 et 14, parallèlement à la direction X. En configuration montée de l'unité 140, la face avant 11 est coplanaire avec la face F1 de l'armoire 100.

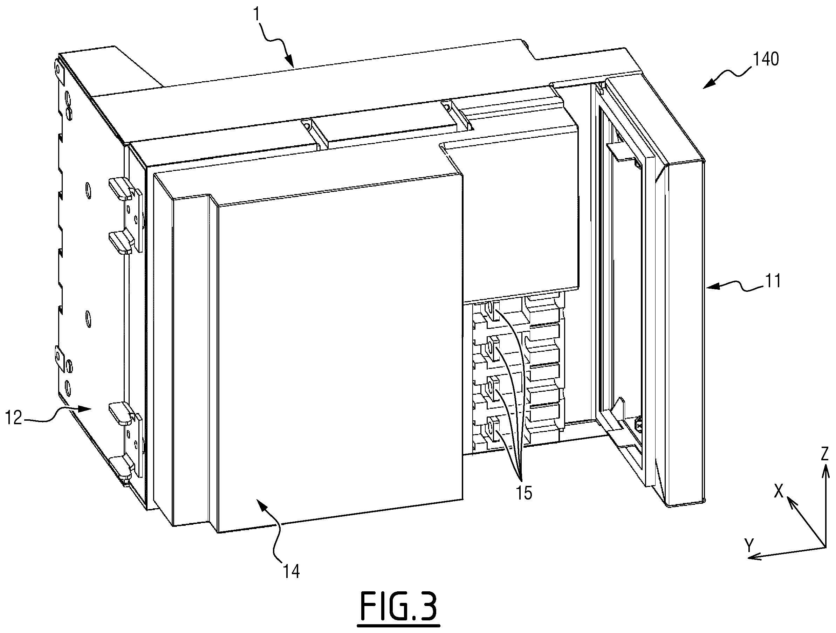

Le raccordement électrique de l'unité de protection 140 et l'alimentation électrique de puissance se fait par l'intermédiaire du jeu de barres 122. Pour cela, alors que le jeu de barres 122 s'étend le long de la face extérieure 14, l'unité 140 comprend par exemple des connecteurs électriques 15, disposés sur la face extérieure 14, comme montré sur la figure 3. Chaque connecteur 15 est connecté à l'une des barres 124, pour recevoir une phase ou le neutre. Par exemple, l'unité de protection 140 comprend quatre connecteurs électriques 15, pour connecter les trois phases et le neutre véhiculées respectivement par les quatre barres 124.

Pour connecter électriquement les unités 138 à l'unité 140, afin que l'unité 140 délivre l'alimentation électrique de puissance aux unités 138, l'unité de protection 140 comprend avantageusement des connecteurs électriques de sortie 16. Chaque connecteur 16 se connecte à une seule unité 138. Alors que les unités 138 sont disposées le long de la face intérieure 13, ces connecteurs 16 sont avantageusement disposées sur la face intérieure 13, le long de la face arrière 12, en étant tournés en direction de la face avant 11, comme montré sur la figure 2. Les connecteurs 16 sont répartis suivant la direction Z. Ici, l'unité de protection 140 comprend six connecteurs 16, pour le raccordement de six unités 138 respectives. Chaque connecteur 16 forme avantageusement quatre sorties électriques, délivrant respectivement les trois phases et le neutre de l'alimentation électrique de puissance.

De préférence, comme visible sur la figure 2, la face 13 du boîtier 1 forme des rails 19, ici six rails 19, parallèles à la direction Y, et répartis selon la direction Z. Chaque rail 19 est à hauteur de l'un des connecteurs 16, suivant la direction Z. Chaque rail 19 est conçu pour recevoir l'une des unités de contrôle-commande 138, lorsqu'elle se présente sous la forme d'un tiroir, l'unité de contrôle commande 138 étant conçue pour être enfilée suivant la direction Y dans le rail 19. Ce faisant, par exemple, un connecteur embrochable de l'unité 138 s'embroche sur le connecteur 16 disposé à l'extrémité de ce rail 19, ce qui connecte électriquement l'unité 138 à l'alimentation électrique de puissance fournie par l'unité de protection 140.

De préférence, le connecteur 15 de neutre est électriquement relié à une sortie électrique de neutre respective de tous les connecteurs 16, par un chemin de conduction de neutre disposé à l'intérieur du boîtier 1, non représenté.

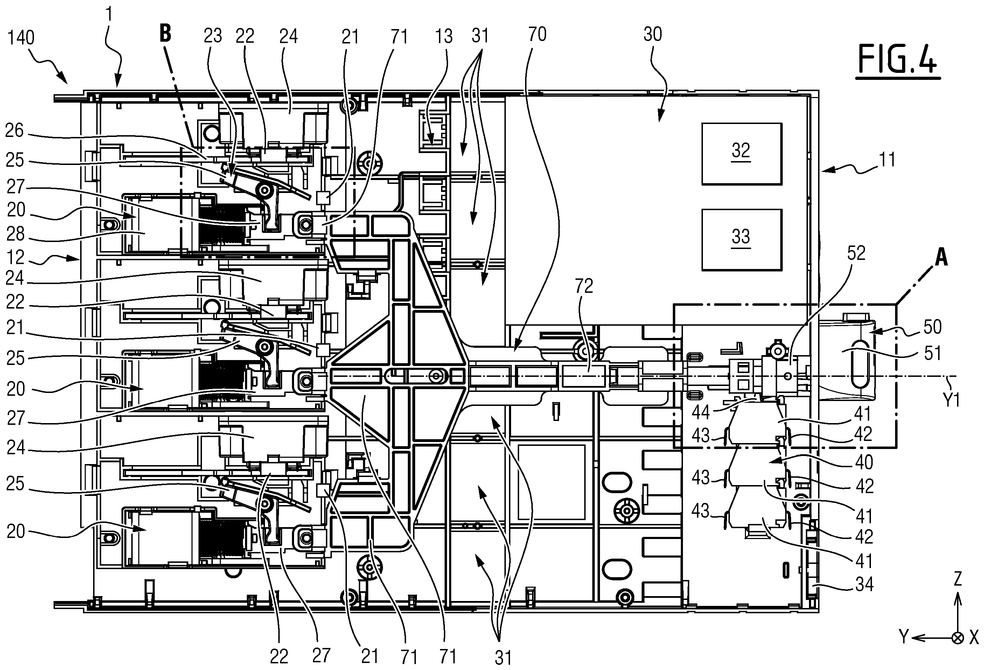

Comme montré sur la figure 4, pour chaque connecteur 15 de phase, l'unité de protection 140 un appareil de commutation de puissance 20 respectif. Ici, l'unité de protection 140 comprend donc trois appareils 20, comme montré sur la figure 4. Chaque appareil 20 relie l'un des connecteurs 15 à une sortie électrique de phase respective de tous les connecteurs 16. Ainsi, pour chaque connecteur 16, les trois sorties électriques de phases sont respectivement reliées à l'un des connecteurs 15 de phase par l'intermédiaire de l'un des appareils 20.

Les appareils 20 sont disposés à l'intérieur, en étant ici répartis parallèlement à la direction Z, le long de la face 12 du boîtier 1. En variante, en fonction du nombre de phases à protéger, on peut prévoir un nombre d'appareils 20 différent de trois. Au minimum, un seul appareil 20 est prévu.

Les appareils 20 assurent la fonction de protection de l'unité de protection 140. Pour cela, chaque appareil 20 est configuré pour sélectivement relier ou isoler électriquement le connecteur 15 aux sorties correspondantes des connecteurs 16.

Chaque appareil 20 comprend une entrée de puissance 21, électriquement raccordée au connecteur 15. Ainsi, l'entrée de puissance 21 est raccordée à l'alimentation électrique de puissance fournie par l'une des barres 124, par l'intermédiaire du connecteur 15, lorsque l'unité 140 est installée dans l'armoire 100. Sur la figure 4, la connexion électrique entre le connecteur 15 et l'entrée 21 n'est pas représentée, par souci de simplification du tracé. Par exemple, l'entrée 21 est reliée au connecteur 15 d'un conducteur souple et/ou d'une barre de conduction.

Chaque appareil 20 comprend aussi une sortie de puissance 22, qui est électriquement connectée à chaque connecteur 16, pour alimenter l'une des sorties de chacun des connecteurs 16. Ainsi, chaque sortie de puissance 22 est raccordée électriquement aux unités de contrôle-commande 138 par l'intermédiaire des connecteurs 16. Sur la figure 4, la connexion électrique entre la sortie 22 et les connecteurs 16 n'est pas représentée par souci de simplification du tracé. On prévoit avantageusement que la connexion électrique est effectuée à l'aide d'un câblage et/ou de barres de conduction.

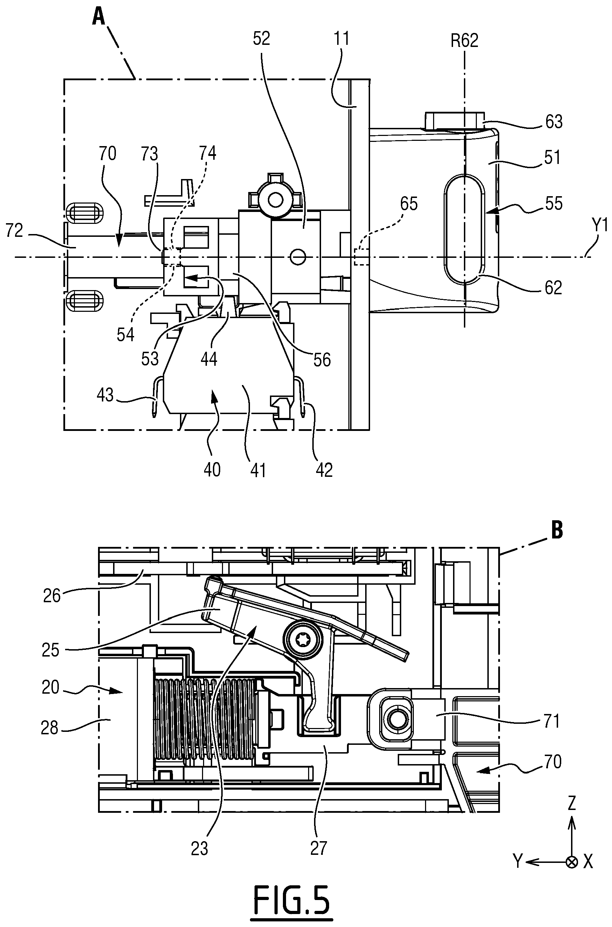

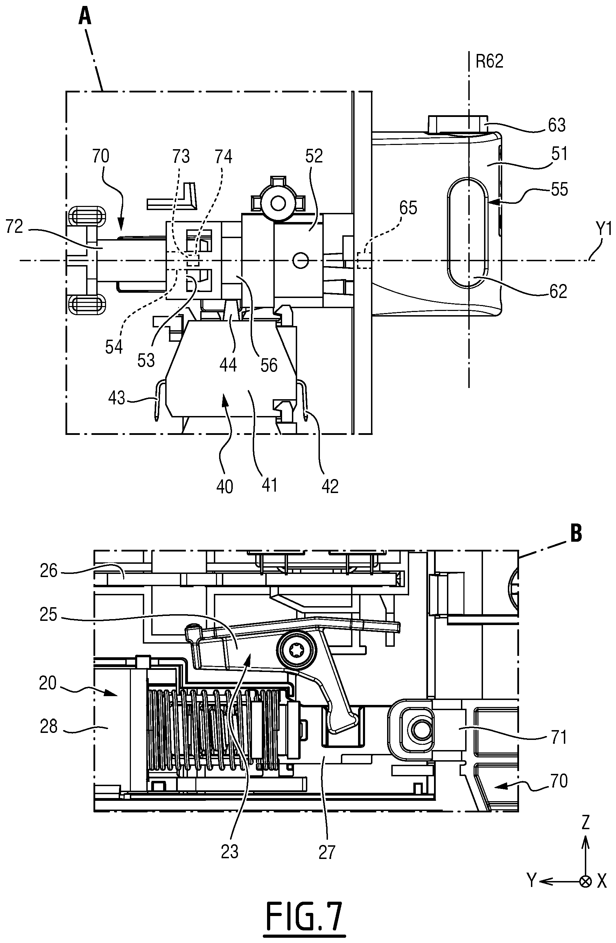

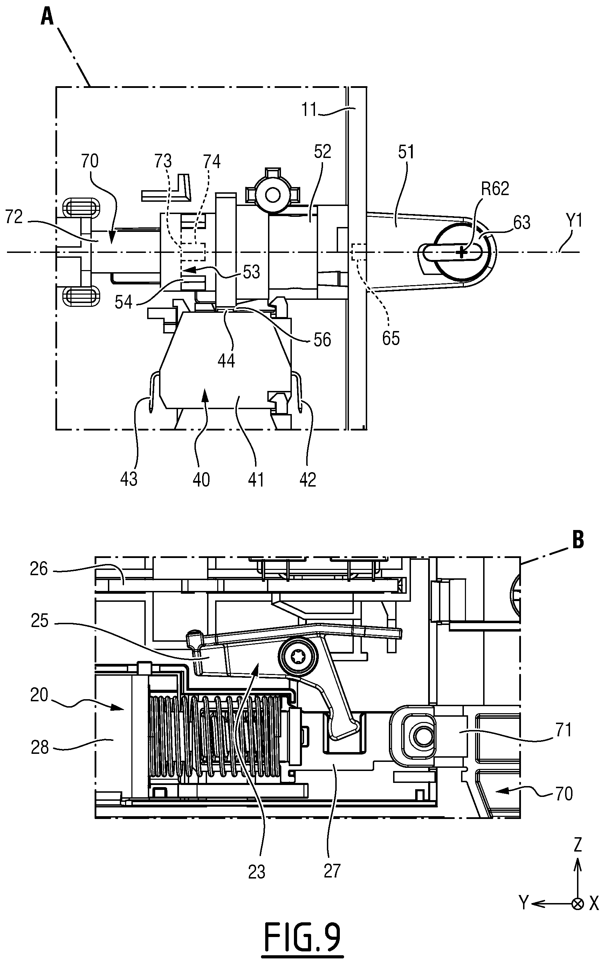

Chaque appareil 20 comprend un commutateur mécanique de puissance 23. Le commutateur mécanique 23 évolue entre une configuration de conduction, montrée sur les figures 4 et 5, où le commutateur 23 relie électriquement l'entrée 21 à la sortie 22, et une configuration d'isolement, montrée sur les figures 7 et 9, où le commutateur 23 isole électriquement l'entrée 21 de la sortie 22, pour protéger électriquement les unités 138 et les charges 104.

De préférence, le commutateur 23 est conçu pour assurer une fonction de sectionneur, visant à séparer l'alimentation électrique de puissance des unités 138 avec un faible pouvoir de coupure. De préférence, pour chaque appareil 20, on prévoit un autre commutateur de puissance 24 en complément du commutateur 23, pour assurer la fonction de protection. Le commutateur 24 peut être mécanique ou électronique, pour assurer une fonction de disjoncteur assurant un isolement rapide avec un plus fort pouvoir de coupure, notamment en cas de défaut électrique sur les charges 104 et/ou sur les unités 138. Dans l'exemple, chaque commutateur 24 est électriquement interposé entre la sortie de puissance 22 de l'un des appareils 20 et les connecteurs 16 que cette sortie 22 dessert. Dans l'exemple, chaque commutateur 24 est électronique, la coupure étant effectuée à l'aide de composants semi-conducteurs tels que des transistors de coupure ou des thyristors.

En variante, le commutateur mécanique 23 est conçu pour avoir la fonction de disjoncteur sans assurer une fonction de sectionneur, ou est conçu pour effectuer les deux fonctions à la fois.

Dans l'exemple, chaque commutateur mécanique 23 comprend un contact mobile 25 et un contact fixe 26. Le contact mobile 25 est ici un contact basculant. Le contact 25 est mobile par rapport au boîtier 1, alors que le contact 26 reste fixe par rapport au boîtier 1. En configuration de conduction, le contact mobile 25 est positionné de façon à être en contact électrique avec le contact 26, pour raccorder électriquement l'entrée 21 à la sortie 22. En configuration d'isolement, le contact mobile 25 est positionné à distance du contact 26 pour isoler électriquement la sortie 22 de l'entrée 21. Dans l'exemple, le commutateur mécanique 23 comprend un coulisseau 27, qui est coulissant par rapport au boîtier 1 parallèlement à l'axe Y1. Le coulisseau 27 coopère mécaniquement avec le contact mobile 25, de sorte que le contact mobile 25 est entraîné entre la position de conduction et la position d'isolement par entraînement en coulissement du coulisseau 27.

Chaque appareil 20 comprend un électro-actionneur 28, qui est configuré pour actionner le commutateur mécanique 23 entre la configuration de conduction et la configuration d'isolement. L'électro-actionneur 28 se présente avantageusement sous la forme d'un actionneur électromagnétique, qui entraîne le déplacement du contact mobile 25 entre les positions de conduction et d'isolement, par entraînement du coulisseau 27 en coulissement suivant la direction Y, pour mettre le commutateur 23 en configuration de conduction, et en sens opposé, pour mettre le commutateur en configuration d'isolement. Ici, l'électro-actionneur 28 est disposé dans la direction Y par rapport au coulisseau 27 qu'il actionne, de sorte que le coulisseau 27 est saillant hors de l'actionneur 28 en sens opposé de la direction Y.

Pour commander les appareils 20 et ainsi assurer la protection des unités 138 et des charges 104, l'unité de protection 140 comprend une unité de commande électronique 30, montrée sur la figure 4. L'unité de commande électronique 30 est disposée à l'intérieur du boîtier 1.

L'unité de commande électronique 30 se présente ici sous la forme d'une carte électronique, tel qu'un circuit imprimé, portant des composants de surface et/ou étant connectée à des composants électroniques. La carte électronique s'étend perpendiculairement à la direction X.

L'unité de commande électronique 30 comprend avantageusement des modules de communication 31, un module de communication 32, un analyseur électronique 33 et/ou une interface de façade 34.

L'analyseur 33 est système électronique, comportant par exemple un processeur mettant en œuvre un code informatique stocké sur une mémoire, ces éléments étant ici formés par les composants de surface de la carte électronique. Fonctionnellement, l'analyseur est conçu pour commander les appareils 20, pour commander en particulier les commutateurs 23, ainsi que les commutateurs 24 s'ils sont prévus.

Pour commander les commutateurs 23, l'analyseur 33 commande les électro-actionneurs 28, faisant ainsi basculer les commutateurs 23 entre la configuration de conduction et la configuration d'isolement. A cette fin, l'unité de commande 30 est connectée, préférentiellement de façon filaire, aux électro-actionneurs 28, afin d'envoyer des ordres aux électro-actionneurs 28 et/ou de les alimenter électriquement. De préférence, l'unité de commande 30 est connectée aux électro-actionneurs 28 et/ou à des capteurs équipant les commutateurs 23, afin de recevoir une information de retour d'état, pour détecter dans quelle configuration sont les commutateurs 23. Autrement dit, l'unité électronique 30 contrôle aussi les capteurs, et tient compte de ce contrôle pour effectuer la commande.

Pour commander les commutateurs 24, l'analyseur effectue une commande électronique des commutateurs 24, lorsque lesdits commutateurs 24 se présentent sous forme de composants semi-conducteurs. A cette fin, l'unité de commande 30 est connectée, préférentiellement de façon filaire, aux commutateurs 24, afin d'envoyer des ordres, alimenter et/ou éventuellement de recevoir des retours d'états des commutateurs 24.

Les modules de communication 31, s'ils sont prévus, sont préférentiellement des composants séparés connectés à la carte électronique de l'unité de commande électronique 30. Comme montré sur les figures 2 et 4, la face 13 du boîtier 1 comprend préférentiellement des fenêtres, en pratique six fenêtres, qui débouchent à hauteur des rails 19, pour que chaque module de communication 31 puisse être connecté à l'une des unités de contrôle-commande 138. Chaque unité de contrôle-commande 138 comprend avantageusement des contacts latéraux pour connecter l'unité 138 l'un de ces modules de communication 31. Chaque module de communication 31 se présente avantageusement sous la forme d'un connecteur pour recevoir des données provenant de l'unité 138 auquel ce module 31 est connecté. Le module 31 transmet ensuite les données à l'analyseur 33, qui effectue la commande des appareils 20 en fonction de ces données. Les données reçues de la part de l'unité 138 via le module 31 concernent préférentiellement des mesures de grandeurs électriques concernant l'alimentation électrique délivrée à la charge 104 par l'unité 138, par exemple concernant l'intensité du courant, la tension et/ou la fréquence, et/ou concernent des informations provenant de capteurs équipant les charges 104, ou placés à proximité des charges 104, tels que par exemple des capteurs de position, de vitesse de rotation et de température, ou encore des capteurs pour mesurer des grandeurs électriques, telles qu'une tension, une intensité ou une fréquence, reçue par les charges 104. Les données reçues par le module 31 concernent avantageusement des informations similaires à celles traitées par l'unité 138 pour effectuer le contrôle-commande de la charge 104. L'unité 138 peut également fournir des données pré-traitées à l'unité 140. En tout cas, les données reçues par l'unité de commande électronique 30 via les modules 31 vise à détecter et/ou anticiper la présence éventuelle d'un défaut électrique ou d'une défaillance au sein des unités 138 et/ou des charges 104. Lorsqu'un tel défaut et/ou défaillance est détecté, l'unité de commande électronique 30 commande aux appareils 20, à l'aide de l'analyseur 33, d'isoler les unités 138 vis-à-vis de l'alimentation électrique de puissance, en faisant basculer les commutateurs 23 et/ou 24 en configuration d'isolement. Dans le présent exemple, dans le cas où le basculement doit être effectué en charge, l'unité de commande électronique 30 fait basculer les commutateurs 24 afin d'effectuer la coupure. Si une séparation doit être effectuée, l'unité de commande électronique 30 fait basculer les commutateurs 23 pour sectionner. Lorsque les conditions sont réunies et que le défaut est acquitté, éventuellement avec intervention humaine, la commande 30 commande un basculement des appareils 20 en configuration de conduction.

Le module de communication 32, s'il est prévu, est avantageusement un composant monté en surface de la carte électronique de l'unité électronique. Le module de communication 32 est connecté au module de communication 134, avantageusement par l'intermédiaire du bus informatique 142, afin d'échanger des données avec le module de communication 134 de la colonne 110, in fine avec l'ordinateur industriel 130. Unité électronique 30 peut donc recevoir des ordres émanant de l'ordinateur 130 et/ou du module 134, de faire basculer les appareils 20 en configuration de conduction et/ou d'isolement. En particulier, hors charge, l'ordinateur 130 peut commander un sectionnement : alors l'unité 30 ordonne une mise en configuration d'isolement des commutateurs mécaniques 23, s'ils constituent des sectionneurs. L'unité électronique 30 peut aussi transmettre des informations concernant l'état des appareils 20 jusqu'à l'ordinateur 130, grâce au module de communication 32, au bus 142 et au module 134.

L'interface de façade 34, si elle est prévue, est avantageusement portée par la face avant 11 de l'unité de protection 140, pour être accessible par un technicien depuis la face F1 de l'armoire 100.

De préférence, l'interface de façade 34 comprend des connecteurs de mesure, par exemple sous la forme de fiches bananes, configurés pour être connectés à un appareil de mesure, pour qu'un technicien puisse mesurer des grandeurs électriques propres à l'unité 140, notamment pour une opération de maintenance. Chaque connecteur de mesure de l'interface de façade 34 est électriquement connecté à l'une des phases ou au neutre à l'intérieur du boîtier 1, émanant de l'alimentation électrique de puissance. En particulier, chaque connecteur de mesure est connecté en aval de l'un des connecteurs électrique 15. Le cas échéant, le connecteur de mesure est connecté en amont de l'entrée 21 de l'appareil 20 qui est électriquement connecté à ce connecteur électrique 15. On prévoit ici quatre connecteurs de mesure, respectivement pour les trois phases et le neutre. L'appareil de mesure connecté aux connecteurs de mesure peut ainsi par exemple mesurer la tension aux phases de l'unité 140, ou d'autres grandeurs électriques, par l'intermédiaire des connecteurs de mesure, que les appareils 20 soient en configuration de conduction ou d'isolement.

Alternativement ou de surcroit, l'interface de façade 34 constitue une interface homme-machine, par exemple sous la forme de boutons poussoirs et/ou d'un écran, pour que le technicien commande une mise en configuration de conduction et une mise en configuration d'isolement des appareils 20. L'interface de façade 34 forme avantageusement un composant séparé de la carte électronique de l'unité de commande électronique 30, et qui y est connecté. L'unité de commande électronique commande les appareils 20 en tenant compte d'éventuels ordres reçus depuis l'interface de façade 34.

Pour son fonctionnement, l'unité de commande électronique 30 est alimentée en énergie électrique par l'alimentation électrique de puissance.

A cette fin, l'unité de protection 140 comprend un appareil de commutation auxiliaire 40, qui est disposé dans le boîtier 1, ici à proximité de la face 11. L'appareil de commutation auxiliaire 40 est apte à évoluer entre une configuration de conduction, pour que l'unité électronique 30 soit électriquement alimentée par l'alimentation électrique, et une configuration d'isolation, pour que l'unité électronique 30 soit électriquement isolée de l'alimentation électrique. L'appareil 40 se présente ici sous la forme de trois interrupteurs 41, qui évoluent de façon coordonnée entre une configuration de conduction et une configuration d'isolation. En configuration de conduction, chaque interrupteur 41 connecte l'unité électronique 30 à l'une des phases de l'alimentation électrique de puissance. En configuration d'isolement, chaque interrupteur 41 isole électriquement l'unité électronique de cette phase.

Plus précisément, pour être ainsi électriquement alimenté, chaque interrupteur 41 présente une entrée auxiliaire 42, raccordée électriquement à l'un des connecteurs 15 à l'intérieur du boîtier 1, en amont l'appareils 20 également connecté à ce connecteur 15. Autrement dit, au sein du boîtier 1, chaque connecteur 15 dessert à la fois l'un des appareils de commutation de puissance 20 et l'une des entrées 42 de l'appareil de commutation auxiliaire. En configuration de conduction, chaque interrupteur 41 relie électriquement son entrée auxiliaire 42 à sa sortie auxiliaire 43. En configuration d'isolement, chaque interrupteur 41 isole électriquement son entrée auxiliaire 42 de sa sortie auxiliaire 43. La sortie auxiliaire 43 de chaque interrupteur 41 est électriquement connecté à l'unité 30. De préférence, l'unité 30 embarque un moyen de conversion, tel comprenant par exemple un transformateur, pour que l'unité électronique 30 reçoive effectivement une énergie électrique avec des caractéristiques adaptées à son fonctionnement, issue de l'alimentation électrique de puissance.

L'appareil de commutation auxiliaire 40 comprend aussi une commande mécanique 44, pour faire basculer l'appareil 40 entre la configuration de conduction et la configuration d'isolement. Ici, la commande mécanique 44 se présente sous la forme d'un bouton, qui est déplaçable par rapport au boîtier 1, perpendiculairement à l'axe Y1, entre une position de conduction, montrée sur les figures 4, 5 et 7 mettant l'appareil 40 en configuration de conduction, et une position d'isolement, montrée sur la figure 9, mettant l'appareil 40 en configuration d'isolement. De manière avantageuse, une seule commande 44 actionne à la fois, de façon synchronisée, les trois interrupteurs 41, entre la configuration de conduction et d'isolation. De préférence, la commande 44 comprend un ressort, qui, par élasticité, exerce un effort de rappel sur le bouton, tendant à ramener la commande 44 en position de conduction lorsqu'elle est en position d'isolement. Autrement dit, l'appareil 40 a une configuration monostable, normalement fermée.

Lorsque l'appareil 40 est en configuration de conduction, l'unité électronique 30 est opérante et peut commander les appareil 20. Lorsque l'appareil 40 est en configuration d'isolement, l'unité électronique 30 est désactivée, et n'est plus apte à commander les appareils 20. Alors, on peut avantageusement prévoir que les appareils 20 conservent l'état qu'ils avaient avant désactivation de l'unité 30. Alternativement, on peut prévoir que les appareils 20 sont monostables et basculent automatiquement en configuration d'isolement lorsque l'unité 30 est ainsi désactivée.

L'unité 140 comprend en outre un système de consignation, qui comprend un verrou 50 et, de préférence, un coulisseau 70. Le système de consignation évolue entre une configuration de consignation, montrée sur les figures 9 à 11, et une configuration de fonctionnement, montrée sur les figures 4 à 8. Pour faire évoluer le système de consignation entre ces deux configurations, un technicien actionne manuellement le verrou 50, sous certaines conditions.

En configuration de consignation, le verrou 50 est positionné de façon à maintenir mécaniquement les commutateurs 23 et l'appareil 40 en configuration d'isolement. Ainsi, la mise en configuration de consignation consigne simultanément l'unité de commande électronique 30 et les appareils 20. Il n'est pas possible de consigner l'unité 30 sans consigner les appareils 20 et vice-versa. Dans cette configuration de consignation, les unités 138 et les charges 104 sont électriquement isolées de l'alimentation électrique de puissance par les commutateurs 23, en configuration d'isolement. Dans cette configuration de consignation, l'unité 30 est désactivée car isolée de l'alimentation électrique par l'appareil 40. Ainsi, il n'est pas possible que l'unité 30 ordonne aux électro-actionneurs 28 de mettre les commutateurs 23 en configuration de conduction. En outre, de manière optionnelle, la désactivation de l'unité 30 met aussi les commutateurs électroniques 24 en en configuration d'isolement, car les commutateurs électroniques 24 nécessitent de recevoir une alimentation électrique de la part de l'unité 30 pour être en configuration de conduction.

En configuration de fonctionnement, le verrou 50 est positionné de façon à autoriser les commutateurs 23 à être déplacés entre la configuration d'isolement et la configuration de conduction, notamment sur commande de l'unité de commande électronique 30, et autorise l'appareil de commutation auxiliaire 40 à évoluer entre la configuration de conduction et la configuration d'isolement. L'appareil de commutation auxiliaire 40 étant préférentiellement normalement fermé, il est automatiquement en configuration de conduction lorsqu'il n'est pas maintenu en configuration d'isolement par le système de consignation, de sorte que, en configuration de fonctionnement, l'unité de commande électronique 30 est active pour commander les appareils 20.

On prévoit également que, lorsque les commutateurs 23 sont en configuration de conduction, le système de consignation est nécessairement en configuration de fonctionnement. Dans cette configuration de fonctionnement, par l'intermédiaire des commutateurs 23 en configuration de conduction, les électro-actionneurs 28 empêchent mécaniquement le système de consignation d'être mis en configuration de consignation, en empêchant mécaniquement un déplacement du verrou 50. Cela évite qu'un technicien puisse mettre le système de consignation en configuration de consignation par actionnement du verrou 50, alors que l'alimentation électrique de puissance délivre une puissance électrique aux unités 138. En revanche, en configuration d'isolement, les électro-actionneurs 28, par l'intermédiaire des commutateurs 23, autorisent mécaniquement le verrou 50 à être déplacé pour que le système de consignation puisse basculer en configuration de consignation.

Une description plus détaillée de la structure du système de consignation est exposée ci-après, pour le mode de réalisation des figures 4 à 12.

Le verrou 50 interagit mécaniquement avec les commutateurs 23 par l'intermédiaire du coulisseau 70. Le coulisseau 70 est entièrement reçu à l'intérieur du boîtier 1, en étant supporté par le boîtier 1. Le coulisseau 70 est mobile en coulissement par rapport au boîtier 1, suivant l'axe Y1, préférentiellement sans rotation. Le coulisseau 70 est attelé à tous les commutateurs mécaniques 23 de l'unité 140. A cette fin, le coulisseau 70 comprend ici trois bras d'actionnement 71, chaque bras 71 étant attelé à l'un des coulisseaux 27. Plus généralement, on prévoit autant de bras 71 que de coulisseaux 27. Pour le mode de réalisation des figures 4 à 12, le coulisseau 70 est solidairement mobile en translation suivant l'axe Y1 par rapport au boîtier 1 avec les coulisseaux 27. Autrement dit, le coulisseau 70 est apte à entraîner simultanément tous les commutateurs 23, via leur coulisseau 27 respectif, entre la configuration de conduction et la configuration d'isolement. Réciproquement, les commutateurs 23 sont aptes à entraîner le coulisseau 27 lorsqu'ils basculent entre la configuration d'isolement et la configuration d'actionnement, notamment sous l'action des électro-actionneurs 28.

Le coulisseau 70 comprend aussi avantageusement un bras principal 72, par l'intermédiaire duquel le coulisseau 70 est guidé en coulissement par le boîtier 1. Le bras 72 est avantageusement centré sur l'axe X71. Une extrémité du bras 72 porte les bras 71, qui y sont rattachés à la façon d'un trident. A l'extrémité opposée du bras 72, le coulisseau 70 coopère mécaniquement avec le verrou 50. Les bras 71 et 72 sont avantageusement disposés dans un plan perpendiculaire à la direction X, c'est-à-dire parallèle à l'axe Y1.

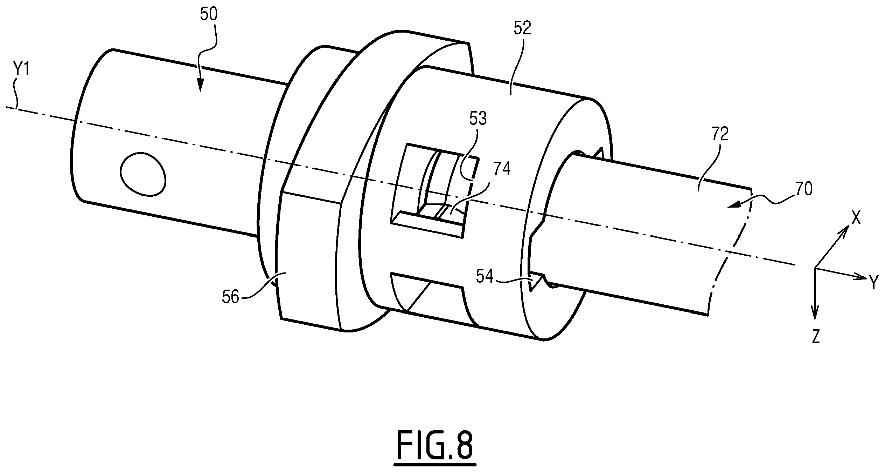

Pour le mode de réalisation des figures 4 à 12, le coulisseau 70 est mobile entre une position dite « position d'empêchement », montrée sur les figures 4 à 6 et une position dite « position d'autorisation », montrée sur les figures 7 et 8. Le coulisseau 70 coulisse entre ces positions d'empêchement et d'autorisation alors que le système de consignation est dans la configuration de fonctionnement. En position d'empêchement, le coulisseau 70 est positionné dans la direction Y par rapport à sa position d'autorisation. Pour ce mode de réalisation, la position de retenue est distincte de la position d'autorisation et de retenue.

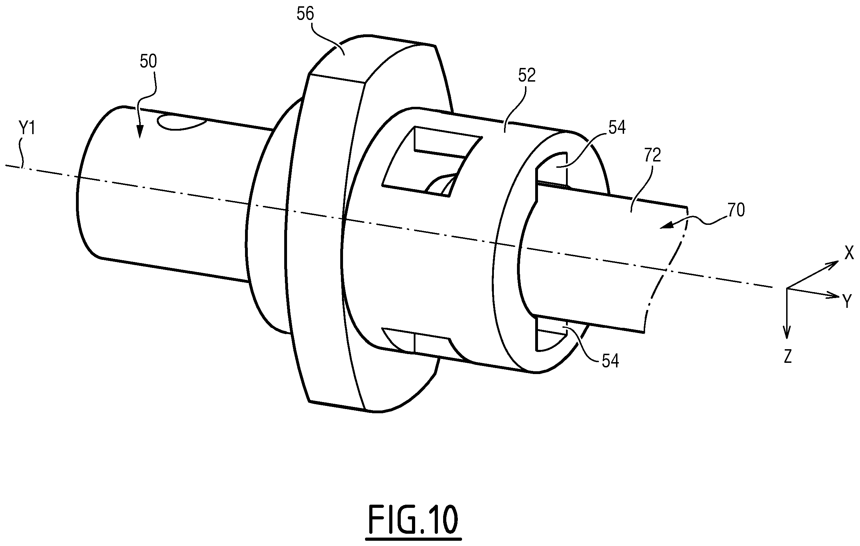

Pour le mode de réalisation des figures 4 à 12, la position d'autorisation est confondue avec une « position de retenue » du coulisseau 70, montrée sur les figures 9 et 10. La position de retenue, ici identique à la position d'autorisation, est adoptée lorsque le système de consignation est en configuration de consignation.

Pour le mode de réalisation des figures 4 à 12, le coulisseau 70 est mis dans la position d'empêchement par les commutateurs 23 via les coulisseaux 27, sous l'action des électro-actionneurs 28, lorsque les commutateurs 23 sont en configuration de conduction, et dans la positon d'autorisation, via les coulisseaux 27, lorsque les commutateurs 23 sont en configuration d'isolement.

Pour le mode de réalisation des figures 4 à 12, le verrou 50 est porté par le boîtier 1, en particulier par la face avant 11. Ici, le verrou 50 est mobile exclusivement en rotation autour de l'axe Y1, entre une position de déconsignation, qui est donc une orientation de déconsignation, montrée sur les figures 4 à 8, et une position de consignation, qui est donc une orientation de consignation, montrée sur les figures 9 à 11. Autrement dit, le verrou 50 est fixe en translation par rapport au boîtier 1 suivant l'axe Y1. La position de déconsignation est adoptée lorsque le système de consignation est en configuration de fonctionnement. La position de consignation est adoptée lorsque le système de consignation est en configuration de consignation. La position de déconsignation et la position de déconsignation sont distinctes. On prévoit avantageusement que, entre ces deux positions, le verrou 50 a effectué moins d'un tour complet autour de l'axe Y1, ici par exemple un quart de tour.

Une partie externe 51 du verrou s'étend hors du boîtier 1, pour que le verrou puisse être actionné entre la position de déconsignation et la position de consignation par le technicien, afin de faire basculer le système de consignation entre la configuration de fonctionnement et la configuration de consignation. Une partie interne 52 du verrou s'étend à l'intérieur du boîtier 1 pour coopérer mécaniquement avec les appareils 20, de préférence via le coulisseau 70, et avec l'appareil 40, de préférence directement.

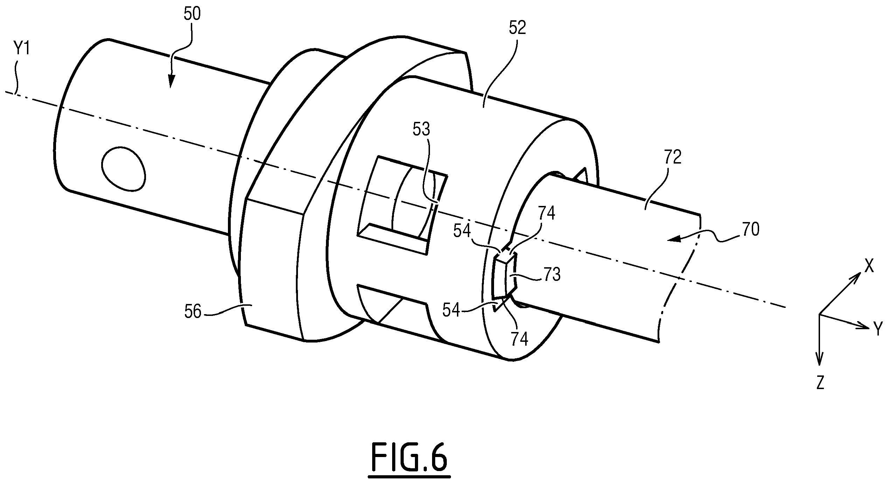

Les figures 6, 8 et 10 montrent plus en détail la façon dont la partie interne 52 du verrou 50 et le bras principal 72 du coulisseau 70 coopèrent mécaniquement.

Dans l'exemple, l'extrémité du bras 71 du coulisseau 70 est reçue à l'intérieur de la partie interne 52 du verrou 50, coaxialement avec l'axe X71. A cette fin, la partie 52 forme un conduit, qui est ouverte suivant la direction Y, pour accueillir l'extrémité du bras 72.

Le coulisseau 70 et le verrou 50 comprennent des butées axiales, dites « butées axiales primaires » et des butées de rotation. Pour former ces butées, le coulisseau 70 comprend par exemple une ou plusieurs cannelures en relief alors que le verrou 50 comprend, à l'intérieur du conduit recevant le coulisseau 70, une ou plusieurs cannelures en creux correspondantes, et autant d'épaulements de retenue. Ici on prévoit deux cannelures en relief diamétralement opposées, et deux cannelures en creux correspondantes diamétralement opposées. On prévoit aussi deux épaulements de retenue diamétralement opposés, qui sont disposés entre les cannelures en creux autour de l'axe Y1, à un quart de tour. Autour de l'axe Y1, chaque épaulement de retenue relie entre elles les deux cannelures en creux et chaque cannelure en creux relie les deux épaulements de retenue.

L'une des cannelures en relief du coulisseau 70 est visible sur les figures 6, 8 et 10, et est formée à l'extrémité du bras 72, parallèlement à l'axe Y1, pour être reçue à l'intérieur du verrou 50.

Chaque cannelure en relief forme une butée axiale primaire 73, qui est une surface perpendiculaire à l'axe Y1, tournée dans le sens de la direction Y.

Chaque cannelure en relief forme deux butées de rotation 74, qui sont des surfaces parallèles ou orthoradiales à l'axe Y1, pour empêcher une rotation. Pour une même cannelure en relief, les butées 74 sont tournées en sens opposé l'une de l'autre.

De façon complémentaire à la butée axiale primaire 73, chaque épaulement de retenue forme une butée axiale primaire 53 respective, en formant une surface perpendiculaire à l'axe Y1, tournée en sens opposé de la direction Y.

De façon complémentaire aux butées de rotation 74, chaque cannelure en creux forme deux butées de rotation 54, qui sont des surfaces parallèles ou orthoradiales à l'axe Y1, pour empêcher une rotation. Pour une même cannelure en creux, les butées 54 se font face.

Comme montré sur les figures 4 à 6, lorsque le coulisseau 70 est en position d'empêchement, ce qui peut se produire seulement en configuration de fonctionnement, les cannelures en relief et en creux sont reçues les unes dans les autres, ce qui autorise le coulissement du coulisseau 70 par rapport au verrou 50 et au boîtier 1 suivant l'axe Y1, tout en empêchant la rotation du verrou 50 par rapport au coulisseau 70 et au boîtier 1 autour de l'axe Y1. En effet, les cannelures étant reçues les unes dans les autres, les butées de rotation 54 font face aux butées de rotation 74 et empêchent la rotation du verrou 50 par rapport au coulisseau 70 autour de l'axe Y1 en venant en butée anti-rotation. Autrement dit, les butées de rotation 54 sont à la même hauteur que les butées 74 le long de l'axe Y1 pour empêcher le verrou 50 d'être mise en position de consignation.

Comme montré sur les figures 7 à 10, lorsque le système de consignation est en configuration de fonctionnement avec le coulisseau 70 en position d'autorisation et lorsque le système de consignation est en configuration de consignation avec le coulisseau 70 en position de retenue, ici identique à la position de consignation, les cannelures en relief ont franchi les cannelures en creux, du fait du coulissement du coulisseau 70 en sens opposé de la direction Y par rapport au verrou 50. Alors, la rotation du verrou 50 n'est plus empêchée, car les butées de rotation 54 et 74 sont axialement décalées suivant l'axe Y1, c'est-à-dire sont à une hauteur différente suivant l'axe Y1. En particulier, les butées 54 sont dans la direction Y par rapport aux butées 74, les cannelures en relief du coulisseau 70 étant alors reçues dans une partie radialement élargie du conduit du verrou 50, où elles ne rencontrent pas d'obstacle lors de la rotation du verrou 50. Alors, les cannelures ainsi libérées, le coulisseau 70 autorise le verrou 50 à pivoter autour de l'axe Y1 entre l'orientation de consignation et l'orientation de déconsignation.

En configuration de fonctionnement, comme montré sur les figures 4 à 8, les butées axiales 53 et 73 sont disposées de sorte à être décalées l'une par rapport à l'autre autour de l'axe Y1. En l'espèce les butées 73 sont disposées à un quart de tour autour de l'axe Y1 par rapport aux butées 53, puisque le verrou 50 est en orientation de déconsignation. Dans le cas des figures 4 à 6 où le coulisseau 70 est en position d'empêchement, les butées 53 et 73 ne sont pas à la même hauteur suivant l'axe Y1. En particulier, les butées 73 sont dans la direction Y par rapport aux butées 53. Dans le cas des figures 7 et 8, les butées 53 et 73 sont à la même hauteur parallèlement à l'axe Y1, mais sont désalignées de sorte à ne pas entrer en butée lorsque le coulisseau 70 est entraîné vers la position d'empêchement. Grâce à ces dispositions concernant les butées 53 et 73, en configuration de fonctionnement, le coulisseau 70 est autorisé à coulisser entre les position d'empêchement et d'autorisation sous l'action des électro-actionneurs 28, via les commutateurs 23.

Comme montré sur les figures 9 et 10, en configuration de consignation, les butées axiales primaires 53 et 73 sont disposées de sorte à être en regard l'une de l'autre parallèlement à l'axe Y1. Il en résulte que le verrou 50 retient le coulisseau 70 en position de retenue, en empêchant le coulisseau de coulisser suivant la direction Y. Alors, les appareils 20 n'ont pas la possibilité de tracter le coulisseau 70 et de basculer en configuration de conduction. En pratique, dans cette configuration, non seulement les cannelures en relief du coulisseau 70 ont franchi les cannelures en creux du verrou 50, mais aussi le verrou 50 a pivoté par rapport au coulisseau 70 de sorte que les cannelures en relief se trouvent axialement en regard des épaulements de retenue correspondants. Alors, les butées axiales 73, formées par les cannelures en relief, viennent en appui dans la direction Y contre les butées axiales 53, formées par les épaulements de retenue, de sorte que le verrou 50 retient axialement le coulisseau 70.

Pour le mode de réalisation des figures 4 à 12, le coulisseau 70 peut être ramené dans la position d'empêchement directement par les appareils 20 via les commutateurs mécaniques 23, alors que le coulisseau 70 a été relâché de sa position de retenue par déplacement du verrou 50 jusqu'à la position de déconsignation.

En variante, en fonction des caractéristiques des électro-actionneurs 28 et des commutateurs 23 choisis, on peut prévoir un ressort, dit « ressort de coulisseau », qui exerce un effort élastique sur le coulisseau 70 parallèlement à l'axe Y, en prenant appui sur le boîtier 1, tendant à déplacer le coulisseau 70 vers la position d'empêchement alors que le coulisseau 70 est en position de retenue.

On prévoit avantageusement que le verrou 50 actionne mécaniquement l'appareil 40 sans pièce intermédiaire, comme montré aux figures 4 à 12. Pour cela, le verrou 50 comprend avantageusement une rampe 56. La rampe 56 se présente sous la forme d'une came, qui est radiale par rapport à l'axe Y1 et est ici en relief. La rampe 56 est formée sur la partie interne 52 du verrou 50.

Quelle que soit l'orientation du verrou 50, la rampe 56 est disposée à hauteur de la commande 44 suivant l'axe Y1. Comme montré sur les figures 4 à 8, la rampe 56 est tournée à l'écart de la commande mécanique 44, ici d'un quart de tour, lorsque le verrou 50 est dans l'orientation de déconsignation, de façon à ne pas actionner la commande 44. Autrement dit, la rampe 56 est dégagée de la commande mécanique 44 de l'appareil 40 lorsque le système de consignation est en configuration de fonctionnement. La commande 44 prend alors librement la position correspondant à la configuration de conduction de l'appareil 40, par exemple sous l'action du ressort interne de l'appareil 40.

Comme montré sur les figures 9 et 10, alors que le verrou 50 est dans l'orientation de consignation, la rampe 56 est tournée de façon à appuyer contre la commande 44, radialement vers l'extérieur, notamment contre l'action du ressort interne de l'appareil 40 s'il est prévu. La commande 44 étant ainsi actionnée par la rampe 56 du verrou 50, l'appareil 40 est en configuration d'isolement.

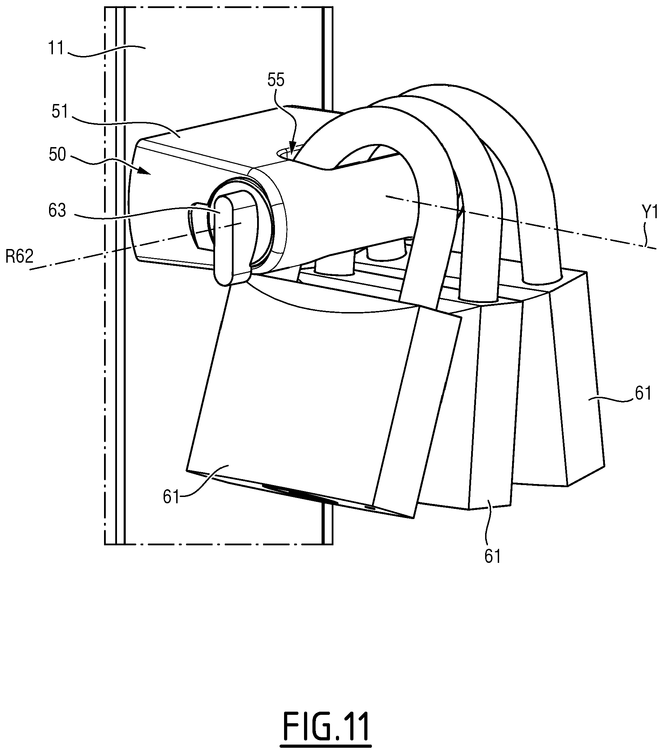

Sur l'extérieur du boîtier 1, la partie externe 51 du verrou 50 comprend un orifice de consignation 55 qui, lorsqu'il n'est pas masqué, est configuré pour recevoir un ou plusieurs cadenas 61. Plus précisément, c'est une anse de verrouillage respective de chaque cadenas qui est reçue dans l'orifice 55, comme montré sur la figure 11.

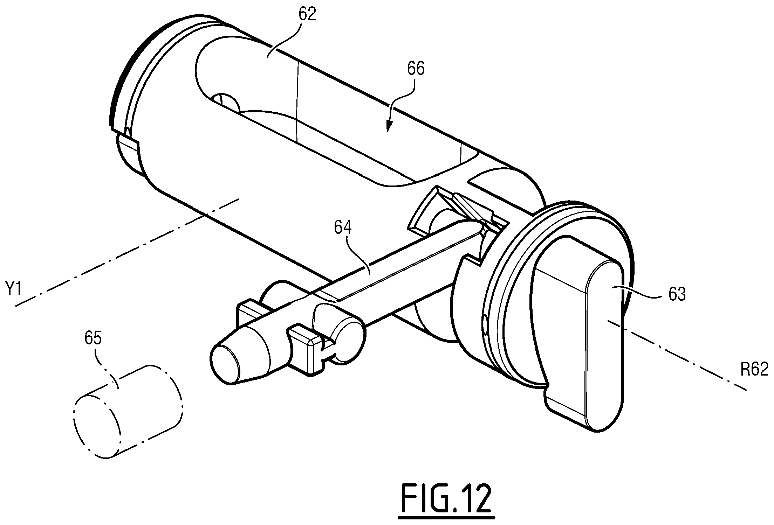

Le système de consignation comprend aussi un système de masquage, visible notamment sur les figures 11 et 12, comprenant ici un volet 62, un doigt 64 et un orifice de verrouillage 65.

Le volet 62 est monté sur la partie externe 51 du verrou 50, en étant mobile par rapport à la partie externe 51, entre une position de masquage où le volet 62 masque l'orifice de consignation 55, comme montré sur les figures 5, 7 et 9, pour empêcher l'orifice de consignation 55 de recevoir les cadenas 61, et une position de libération, comme montré sur la figure 11, où le volet 62 libère l'orifice de consignation 55 pour que l'orifice 55 puisse recevoir les cadenas 61. Pour être ainsi mobile, le volet 62 est par exemple pivotant par rapport au verrou 50 autour d'un axe R62 fixe par rapport au verrou 50, l'axe R62 étant radial ou perpendiculaire par rapport à l'axe Y1. Lorsque le verrou est en position de consignation, le technicien peut actionner le volet 62 à l'aide d'une commande manuelle, ici un bouton 63.

Lorsque les cadenas 61 sont reçus dans l'orifice 55 avec le volet 62 en position de libération, les cadenas 61 empêchent le volet 62 d'être mis en position de masquage, par coopération mécanique entre les cadenas 61 et le volet 62. Par exemple, les cadenas traversent un orifice 66 appartenant au volet 62, qui est diamétral par rapport à l'axe R62 et qui se retrouve aligné avec l'orifice 55 lorsque le volet 62 est en position de libération. En position de masquage, l'orifice 66 est lui-même masqué à l'intérieur de la partie externe 51 du verrou 50. L'orifice 66 est mieux visible sur la figure 12, où le système de masquage est représenté seul.

Le doigt 64 est monté au sein du verrou 50, et est mobile de façon assujettie avec le volet 62. Lorsque le volet 62 est en position de libération, le doigt 64 est dans une position de verrouillage, où le doigt 64 fait saillie suivant la direction Y. Lorsque le volet 62 est en position de masquage, le doigt 64 est escamoté en sens opposé de la direction Y. Pour être ainsi déplacé par le volet 62, on prévoit par exemple que l'une des extrémités du doigt 64 est liée au volet 62 par une liaison pivot, autour d'un axe parallèle et non confondu avec l'axe R62, à la façon d'une manivelle, et que l'autre extrémité du doigt 64 est guidé en coulissement à son extrémité opposée par un guide formé à l'intérieur du verrou 50, parallèlement à l'axe Y1.

L'orifice de verrouillage 65 est par exemple ménagé dans la face avant 11 du boîtier 1. Sur les figures 5, 7, 9 et 12, l'orifice 65 est représenté par transparence en traits discontinus. L'orifice 65 débouche sur l'extérieur du boîtier 1, en étant positionné à distance de l'axe Y1. Ici l'axe Y1 est situé dans la direction X par rapport à l'orifice 65.

Lorsque le verrou 50 est en position de consignation, le verrou 50 est positionné de sorte que l'extrémité du doigt 64 est alignée avec l'orifice 65. Alors, le doigt 64 est autorisé à être déplacé entre la position de déverrouillage et la position de verrouillage, par actionnement du volet 62 respectivement entre la position de masquage et la position de libération.

En position de verrouillage, le doigt 64 est reçu dans l'orifice 65, de sorte que le doigt 64 verrouille l'orientation du verrou 50, le maintenant à l'orientation de consignation. Le fait d'introduire les cadenas 61 dans l'orifice 55 du verrou 50 bloquant le volet 62 en position de libération, le volet 62 bloque le doigt 64 en position de verrouillage dans l'orifice 65, ce qui bloque le verrou 50 en position de consignation.

Lorsque le verrou 50 est en position de déconsignation, le doigt 64 n'est plus en regard de l'orifice 65. Alors le doigt 64 est empêché d'être en position de verrouillage par la face avant 11, et est donc nécessairement en position de déverrouillage. Ainsi positionné, le doigt 64 maintient le volet 62 en position de masquage. Ainsi, en position de déconsignation, le volet 62 ne peut pas être mis en position de libération et les cadenas 61 ne peuvent pas être reçus dans l'orifice 55.

Pour mettre le verrou 50 en position de déconsignation, on doit préalablement retirer les cadenas 61 de l'orifice 65, ce qui autorise à déplacer le volet 62 jusqu'à la position de libération. Le volet 62 étant en position de libération, le doigt 64 est en position de déverrouillage. Lorsque le doigt 64 est en position de déverrouillage, il est dégagé de l'orifice 65, de sorte que le système de masquage de s'oppose plus au pivotement du verrou 50 entre les positions de consignation et de déconsignation.

En définitive, le système de masquage est configuré pour que, lorsque les cadenas 61 sont reçus, le verrou 50 ne peut pas être mis en position de déconsignation et pour que, lorsque les cadenas 61 sont retirés, le technicien peut mettre le verrou en position en position de déconsignation en actionnant le système de masquage, en l'occurrence le volet 62. Alors, les cadenas 61 ne peuvent être à nouveau mis en place sur le verrou 50 que si le verrou 50 est à nouveau positionné en position de consignation et que le système de masquage est mis en position de libération. Cela verrouille à nouveau le verrou 50 en position de consignation.

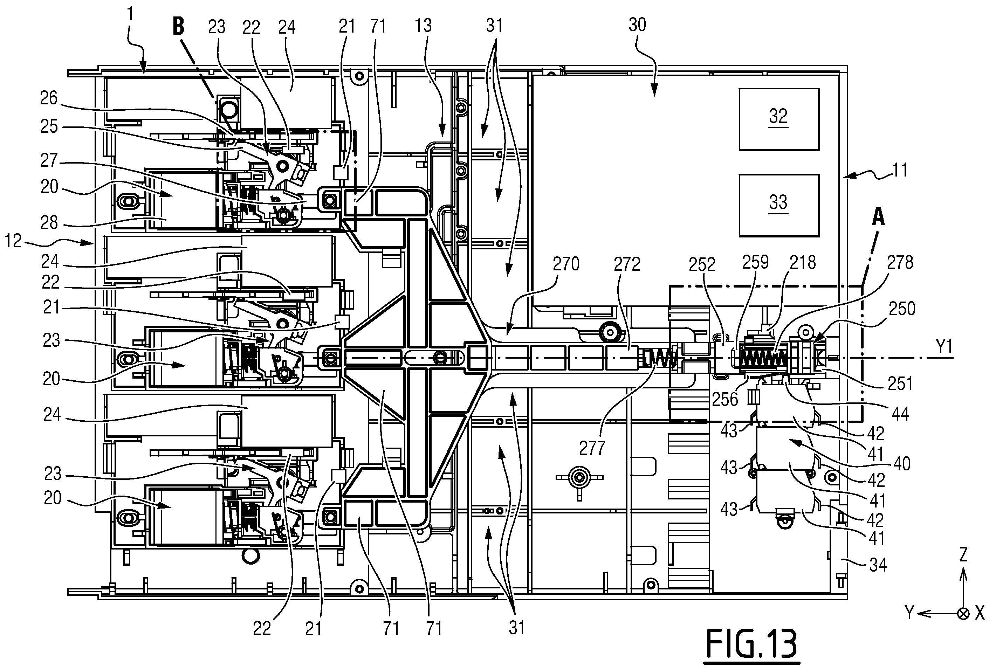

Les figures 13 à 17 montrent un autre mode de réalisation, où seul le système de consignation est modifié par rapport au mode de réalisation des figures 4 à 12. Hormis pour les différences mentionnées ci-dessous, toutes les caractéristiques mentionnées ci-avant pour le mode de réalisation des figures 4 à 12 sont valables pour le mode de réalisation des figures 13 à 17 même si elles ne sont pas répétées. Les caractéristiques répondant aux mêmes fonctions ou étant de même nature dans le mode de réalisation des figures 13 à 17, par rapport au mode de réalisation des figures 4 à 12, sont désignées avec les mêmes signes de référence augmentés de 200.

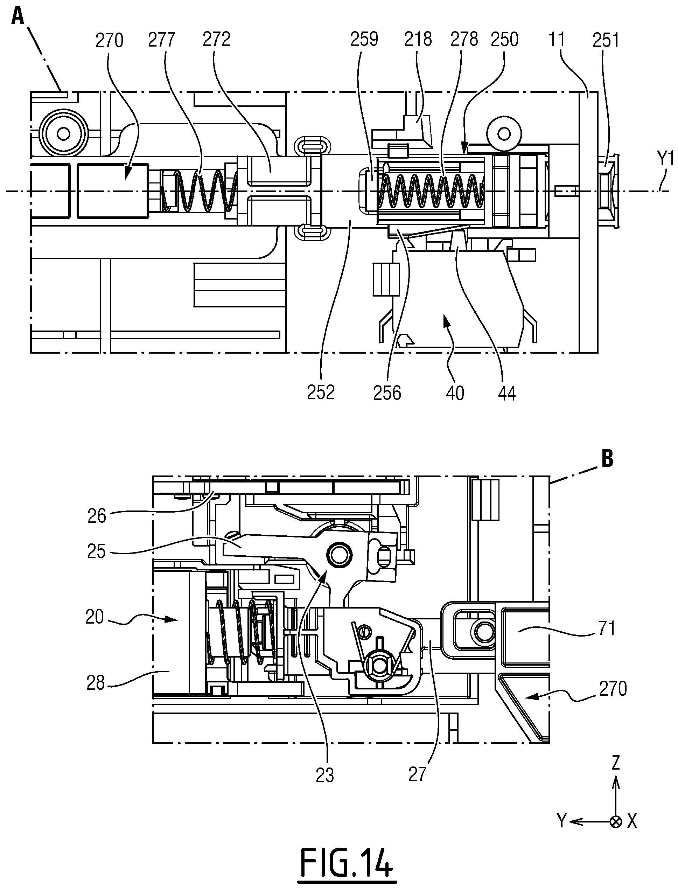

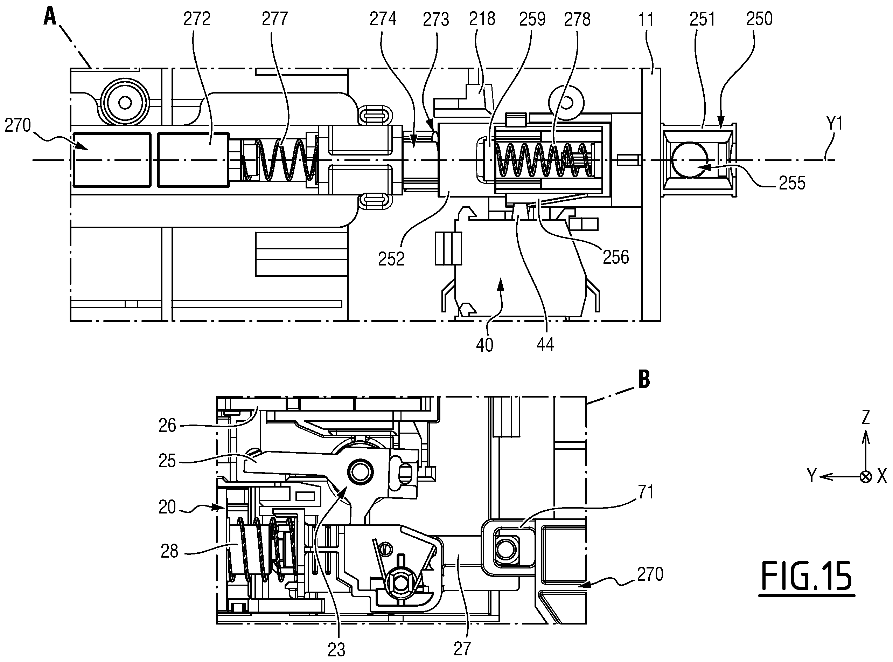

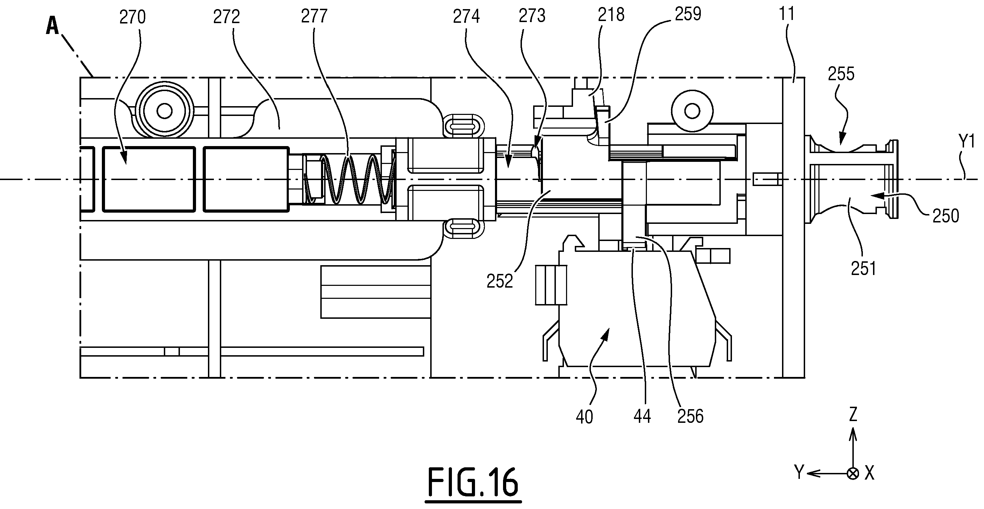

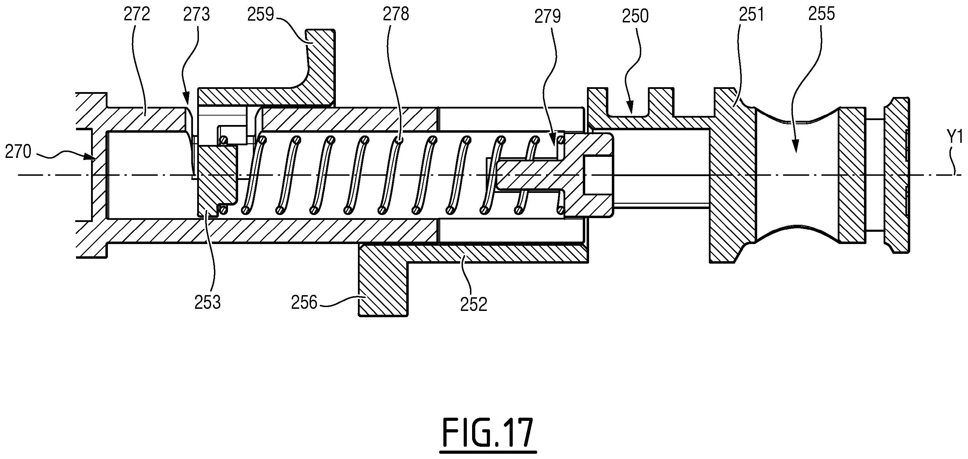

L'unité 140 du mode de réalisation des figures 13 à 17, comprend un verrou 250 et, de préférence, un coulisseau 270, formant le système de consignation. Le système de consignation des figures 13 à 17 évolue entre la configuration de consignation, montrée sur les figures 16 et 17, et la configuration de fonctionnement, montrée sur les figures 13 et 14. Le système de consignation adopte également une configuration intermédiaire montrée sur la figure 15, qui est intermédiaire entre les configurations de fonctionnement et de consignation. Pour faire évoluer le système de consignation entre ces configurations, un technicien actionne manuellement le verrou 250, sous certaines conditions.

En configuration de consignation, le verrou 250 est positionné de façon à maintenir mécaniquement les commutateurs 23 et l'appareil 40 en configuration d'isolement. Ainsi, la mise en configuration de consignation consigne simultanément l'unité de commande électronique 30 et les appareils 20. Il n'est pas possible de consigner l'unité 30 sans consigner les appareils 20 et vice-versa. Dans cette configuration de consignation, les unités 138 et les charges 104 sont électriquement isolées de l'alimentation électrique de puissance par les commutateurs 23, en configuration d'isolement. Dans cette configuration de consignation, l'unité 30 est désactivée car isolée de l'alimentation électrique reçue aux connecteurs 15,par l'appareil 40. Ainsi, il n'est pas possible que l'unité 30 ordonne aux électro-actionneurs 28 de mettre les commutateurs 23 en configuration de conduction. En outre, de manière optionnelle, la désactivation de l'unité 30 met aussi les commutateurs électroniques 24 en en configuration d'isolement, car les commutateurs électroniques 24 nécessitent de recevoir une alimentation électrique de la part de l'unité 30 pour être en configuration de conduction.

En configuration de fonctionnement, le verrou 250 est positionné de façon à autoriser les commutateurs 23 à être déplacés entre la configuration d'isolement et la configuration de conduction, notamment sur commande de l'unité de commande électronique 30, et autorise l'appareil de commutation auxiliaire 40 à évoluer entre la configuration de conduction et la configuration d'isolement. L'appareil de commutation auxiliaire 40 étant préférentiellement normalement fermé, il est automatiquement en configuration de conduction lorsqu'il n'est pas maintenu en configuration d'isolement par le système de consignation, de sorte que, en configuration de fonctionnement, l'unité de commande électronique 30 est active pour commander les appareils 20.

On prévoit également que, lorsque les commutateurs 23 sont en configuration de conduction, le système de consignation est nécessairement en configuration de fonctionnement. Dans cette configuration de fonctionnement, lorsque les commutateurs 23 sont en configuration de conduction, les commutateurs 23 empêchent mécaniquement le système de consignation d'être mis en configuration de consignation, en escamotant le verrou 250 à l'intérieur du boîtier 1. Cela évite qu'un technicien puisse mettre le système de consignation en configuration de consignation par actionnement du verrou 250, alors que l'alimentation électrique de puissance délivre une puissance électrique aux unités 138. En revanche, en configuration d'isolement, les commutateurs 23 autorisent mécaniquement le verrou 250 à être déplacé pour que le système de consignation puisse basculer en configuration de consignation.

Un description plus détaillée de la structure du système de consignation est exposée ci-après, pour le mode de réalisation des figures 13 à 17.

Le verrou 250 interagit mécaniquement avec les commutateurs 23 par l'intermédiaire du coulisseau 270. Le coulisseau 70 est entièrement reçu à l'intérieur du boîtier 1, en étant supporté par le boîtier 1. Le coulisseau 270 est mobile en coulissement par rapport au boîtier 1, suivant l'axe Y1, préférentiellement sans rotation. Le coulisseau 270 est attelé à tous les commutateurs mécaniques 23 de l'unité 140, avec des bras 71, identiques aux bras 71 du coulisseau 70.

Le coulisseau 270 comprend aussi avantageusement un bras principal 272, différent du bras principal 72. Le coulisseau 270 est guidé en coulissement par le boîtier 1 par l'intermédiaire du bras 272. Le bras 272 est avantageusement centré sur l'axe X71. Une extrémité du bras 272 porte les bras 71, qui y sont rattachés à la façon d'un trident. A l'extrémité opposée du bras 272, le coulisseau 270 coopère mécaniquement avec le verrou 250. Les bras 71 et 272 sont avantageusement disposés dans un plan perpendiculaire à la direction X, c'est-à-dire parallèle à l'axe Y1.

Dans le sens de la direction Y, le coulisseau 270 est mobile successivement entre une position d'empêchement, montrée sur la figure 13, une position d'autorisation, montrée sur la figure 14 et une position de retenue, montrée sur les figures 15 et 16. Ces trois positions sont avantageusement toutes distinctes. Le coulisseau 270 coulisse entre les positions d'empêchement et d'autorisation alors que le système de consignation est dans la configuration de fonctionnement. La position de retenue est adoptée lorsque le système de consignation est en configuration de retenue et, de préférence, en configuration intermédiaire.

En configuration de fonctionnement, le coulisseau 270 est mis dans la position d'empêchement par les commutateurs 23 via les coulisseaux 27, sous l'action des électro-actionneurs 28, lorsque les commutateurs 23 sont en configuration de conduction, et dans la positon d'autorisation, via les coulisseaux 27, lorsque les commutateurs 23 sont en configuration d'isolement.

De préférence, le système de consignation comprend un ressort 277, dit « ressort de coulisseau ». Le ressort 277 exerce un effort élastique sur le coulisseau 270, en prenant appui sur le boîtier 1, tendant à déplacer le coulisseau 270 vers la position d'empêchement, lorsque le coulisseau 270 est en position de retenue ou en position d'empêchement.

Pour le mode de réalisation des figures 13 à 17, le verrou 250 est porté par le coulisseau 270, à savoir par le bras 272, plutôt que par le boîtier 1, en étant disposé à proximité et/ou au travers de la face avant 11. Le verrou 250 comprend une partie interne 252, par l'intermédiaire de laquelle le verrou 250 coopère avec le bras 272.

Par coopération du bras 272 avec la partie interne 252, en fonction de la position du verrou 250 par rapport au coulisseau 270, le verrou 250 est autorisé soit à coulisser suivant l'axe Y1 par rapport au coulisseau 270, soit à pivoter par rapport au coulisseau 270 autour de l'axe Y1, comme suit.

Le verrou 250 est mobile en coulissement par rapport au coulisseau 270 suivant l'axe Y1, entre une hauteur initiale, montrée sur les figures 13 et 14, adoptée en configuration de fonctionnement, et une hauteur de consignation, montrée sur les figures 15 et 16, adoptée en configuration intermédiaire et en configuration de consignation. Lorsque le verrou 250 coulisse par rapport au coulisseau 270 et/ou lorsque le coulisseau 270 coulisse par rapport au boîtier 1, le verrou 250 est translaté par rapport au boîtier 1 suivant l'axe Y1.

Lorsque le verrou 250 est à la hauteur initiale par rapport au coulisseau 270, le verrou 250 est fixe en rotation autour de l'axe Y1 par rapport au coulisseau 270, dans une orientation de déconsignation. L'orientation de déconsignation est montrée sur les figures 13 à 15.

Lorsque le verrou 250 est à la hauteur de consignation par rapport au coulisseau 270, le verrou 250 est pivotant entre l'orientation de déconsignation, comme montré sur la figure 15, et l'orientation de consignation, montrée sur la figure 16. Lorsque le verrou 250 est à la fois dans l'orientation de consignation et la hauteur de consignation, le verrou 250 est en position de consignation. On prévoit avantageusement que, entre l'orientation de déconsignation et l'orientation de consignation, le verrou 250 a effectué moins d'un tour complet autour de l'axe Y1, ici par exemple un quart de tour.

De préférence, lorsque le verrou 250 est dans la position de consignation, c'est-à-dire à la hauteur de consignation et dans l'orientation de consignation, le verrou 250 est fixé en translation par rapport au coulisseau 270 suivant l'axe Y1. En définitive, le verrou 250 ne peut coulisser par rapport au coulisseau 270 que dans l'orientation de déconsignation, et ne peut pivoter par rapport au coulisseau 270 qu'en étant positionné à la hauteur de consignation.

Lorsque le verrou 250 est positionné à la hauteur de consignation, le verrou 250 arrive en butée axiale contre le coulisseau en sens opposé de la direction Y. Dès lors, lorsque l'on coulisse le verrou 250 en sens opposé de la direction Y et que l'on atteint la hauteur de consignation, le verrou 250 entraîne le coulisseau 270 en sens opposé de la direction Y, par mise en butée axiale.

Lorsque le verrou 250 est positionné à la hauteur initiale, le verrou 250 arrive en butée axiale contre le coulisseau 270 suivant la direction Y.

Comme montré notamment sur la figure 17, pour guider le coulissement et le pivotement du verrou 250 par rapport au coulisseau 270, on prévoit par exemple que le bras 272 présente une forme tubulaire mâle coaxiale avec l'axe Y1, qui est reçue à l'intérieur d'une cavité de forme complémentaire, formée par la partie interne 252. La forme tubulaire mâle du bras 272 est guidée en coulissement suivant l'axe Y1 et en pivotement autour de l'axe Y1 par la cavité de la partie interne 252.

Comme montré sur la figure 17, pour empêcher le coulissement du verrou 250 par rapport au coulisseau 270, tout en autorisant le pivotement du verrou 250 par rapport au coulisseau 270, lorsque le verrou 250 est à hauteur de consignation et en orientation de consignation, la partie interne 252 du verrou 250 comprend avantageusement un doigt radial interne 253, qui circule dans une gorge périphérique 273 formée par le bras 272 du coulisseau 270. Pour empêcher le pivotement du verrou 250 par rapport au coulisseau 270, tout en autorisant le coulissement du verrou 250 par rapport au coulisseau 270, lorsque le verrou 250 est dans l'orientation de déconsignation et à la hauteur initiale, le doigt radial interne 253, qui circule dans une rainure axiale 274 formée par le bras 272 du coulisseau 270. La rainure axiale 274 est visible sur les figures 15 et 16. La rainure 274 s'étend dans la direction Y en débutant à partir d'une extrémité de la gorge 273, de sorte que la rainure 274 et la gorge 273 sont disposées en « L ».

La rainure 274 et le doigt radial interne 253 constituent des butées de rotation, qui sont disposées de sorte à être à même hauteur le long de l'axe principal Y1, lorsque le système de consignation est en configuration de fonctionnement avec le coulisseau en position d'empêchement ou en position d'autorisation, pour que le coulisseau 270 maintienne le verrou 250 dans l'orientation de déconsignation par mise en butée des butées de rotation autour de l'axe Y1. Les butées de rotation 253 et 274 sont à hauteur différente le long de l'axe Y1, lorsque le système de consignation est en configuration de consignation et en configuration intermédiaire, pour que le coulisseau 270 autorise le verrou 250 à être pivoté entre l'orientation de consignation et l'orientation de déconsignation.

Le système de consignation comprend avantageusement un ressort 278, dit « ressort de verrou », qui est par exemple logé entre le verrou 250 et le coulisseau 270, coaxialement avec l'axe Y1, à l'intérieur de la cavité formée par la partie interne 252 du verrou 250.

Le ressort 278 exerce un effort élastique sur le verrou 250, en prenant appui sur le coulisseau 270, tendant à déplacer le verrou 250 vers la hauteur initiale, lorsque le verrou 250 est à la hauteur de consignation. Autrement dit, le ressort 278 tracte le verrou 250 dans la direction Y, en prenant appui sur le coulisseau 270. Par exemple, comme montré sur la figure 17, le ressort 278 est un ressort de compression qui prend appui suivant la direction Y sur le verrou 250, par exemple sur le doigt 253, et qui prend appui en sens opposé sur le coulisseau 270, par exemple sur une paroi axiale 279 à l'extrémité du bras 272. En configuration de fonctionnement, les commutateurs 23 entraînent un coulissement solidaire suivant l'axe Y1 d'un ensemble constitué par le 250 et le coulisseau 270, en entraînant le coulisseau 270, entre la position d'empêchement, lorsque les commutateurs 23 sont en configuration de conduction, et la position d'autorisation, lorsque les commutateurs 23 sont en configuration d'isolement. Lors de ce coulissement, le ressort 278 maintient le verrou 250 à la hauteur initiale, par rapport au coulisseau 270.

Pour le mode de réalisation des figures 13 à 17, le verrou 250 comprend un ergot radial externe 259, qui est porté par la partie interne 252. Le boîtier 1 comprend un ergot 218, qui est formé à l'intérieur du boîtier 1 à proximité de la partie interne 252 et qui est configuré pour coopérer mécaniquement avec l'ergot radial externe 259. Lorsque le verrou 250 est dans l'orientation de déconsignation, l'ergot 259 est décalé par rapport à l'ergot 218 autour de l'axe Y1, de sorte à ne pas pouvoir venir en butée axiale contre l'ergot 218, et ainsi autoriser la translation du verrou 250 par rapport au boîtier 1 suivant l'axe Y1. Comme montré sur la figure 16, lorsque le verrou 250 est en position de consignation, c'est-à-dire à la fois dans l'orientation de consignation et à la hauteur de consignation, l'ergot 259 est axialement aligné avec l'ergot 218, de sorte que l'ergot 259 vient en butée contre l'ergot 218 suivant la direction Y. Ainsi, en position de consignation, le boîtier 1 retient le verrou 250 à la hauteur de consignation. Pour modifier la hauteur du verrou 250 suivant l'axe Y1, il convient donc préalablement de pivoter le verrou 250 jusqu'à l'orientation de déconsignation afin que les ergots 218 et 259 soient dégagés l'un de l'autre. En ce sens, les ergots 218 et 259 constituent des butées axiales, dites « butées axiales secondaires ». Ces butées axiales secondaires 218 et 259 sont disposées de sorte à être en regard l'une de l'autre parallèlement à l'axe Y1, lorsque le verrou 250 est dans la position de consignation, pour que, en configuration de consignation, le boîtier 1 retienne le verrou 250 en position de retenue par mise en butée axiale des butées secondaires 218 et 259 ainsi alignées. Lorsque le verrou 250 est en orientation de déconsignation, quelle que soit sa hauteur par rapport au boîtier 1, les butées secondaires 218 et 259 sont décalées l'une par rapport à l'autre autour de l'axe Y1. Ainsi, en configuration de fonctionnement et en configuration intermédiaire, les butées 218 et 259 ne peuvent pas venir en butée axiale l'une contre l'autre, ce qui fait que le boîtier 1 autorise le verrou 250 à être déplacé entre la hauteur de consignation et la hauteur initiale.

Pour le mode de réalisation des figures 13 à 17, la gorge 273 et le doigt radial interne 253 constituent les butées axiales primaires pour le coulisseau 270 et le verrou 250. Comme montré sur les figures 16 et 17, ces butées 253 et 273 se trouvent en regard l'une de l'autre parallèlement à l'axe Y1 lorsque le verrou 250 est dans la position de consignation, c'est-à-dire en orientation de consignation et hauteur de consignation. Ainsi, en configuration de consignation, le verrou 250, lui-même retenu par le boîtier 1 via les butées axiales secondaires 218 et 259, retient le coulisseau 270 en position de retenue par mise en butée des butées axiales primaires ainsi en regard. Alors, le coulisseau 270 maintient les commutateurs 23 en configuration d'isolement. En effet, on a vu que, pour la position de consignation, la gorge 273 capture axialement le doigt radial interne 253 pour bloquer le coulissement du verrou 250 par rapport au coulisseau 270.

Pour retenir les commutateurs 23 en configuration d'isolement lorsque le coulisseau 270 est maintenu en position de retenue par le verrou 250, on prévoit que chaque coulisseau 27 vient en butée axiale suivant la direction Y contre le bras 71 du coulisseau 270 auquel ce coulisseau 27 est attelé, comme montré par exemple sur la figures 15 pour la configuration intermédiaire. En configuration de fonctionnement, chaque bras 71 du coulisseau 270 est maintenu en butée dans la direction Y contre les coulisseaux 27 pour que le coulisseau 270 suive le coulissement des coulisseaux 27 et soit déplacé en position d'autorisation lorsque les commutateurs 23 sont en configuration d'isolement et en position d'empêchement lorsque les commutateurs 23 sont en configuration de conduction.

Dans la situation des figures 13 à 15, c'est-à-dire lorsque le verrou 250 est dans l'orientation de déconsignation, les butées axiales primaires 253 et 273 sont décalées l'une par rapport à l'autre autour de l'axe Y1. Dans cette situation, le verrou 250 n'est pas non plus retenu à la hauteur de consignation par le boîtier 1, puisque les butées axiales secondaires 218 et 259 sont décalées autour de l'axe Y1. Alors, si le verrou 250 n'est pas retenu à la hauteur de consignation par d'autres moyens, notamment par un technicien ou un cadenas, le verrou 250 autorise le coulisseau 270 à être déplacé entre la position d'empêchement et la position d'autorisation. De ce fait, les butées primaires et secondaires autorisent le coulisseau 270 à être déplacé entre la position d'empêchement et la position d'autorisation, en configuration de fonctionnement et en configuration intermédiaire. Alors, le verrou 250 est ramené et maintenu en butée contre le coulisseau 270 suivant la direction Y, à la hauteur de consignation, et est déplacé solidairement avec le coulisseau 270 suivant l'axe Y1. Dans la configuration de fonctionnement, la configuration d'isolement et de conduction des commutateurs 23 détermine la position du coulisseau 270 le long de l'axe Y1 par rapport au boîtier 1, respectivement la position d'autorisation et la position d'empêchement.

Dans la configuration de fonctionnement, le ressort 278 maintient le verrou 250 à la hauteur initiale par rapport au coulisseau 270, que le coulisseau soit en position d'empêchement ou d'autorisation. Le verrou 250 étant alors nécessairement en orientation de déconsignation.

Le verrou 250 comprend une partie externe 251 qui, en configuration de fonctionnement avec le coulisseau 270 en position d'empêchement, est escamotée à l'intérieur du boîtier 1, comme montré sur la figure 13. Autrement dit, la partie externe 251 est dans la direction Y par rapport à la face avant 11 du boîtier 1 lorsque le coulisseau 270 est en position d'empêchement, traduisant que les commutateurs 23 sont en configuration de conduction. Alors, le verrou 250 ne peut pas être actionné par le technicien, qui ne peut pas actionner la partie externe 251 depuis l'extérieur du boîtier 1. Grâce à cette disposition, le technicien ne peut pas mettre le système de consignation en configuration de consignation lorsque les commutateurs 23 sont en configuration de conduction, évitant ainsi une consignation alors qu'un fort courant issu de l'alimentation électrique de puissance traverse les commutateurs 23.

En configuration de fonctionnement avec le coulisseau 270 en position d'autorisation, au moins une extrémité de la partie externe 251 fait saillie hors du boîtier 1, en traversant une ouverture ménagée dans la face avant 11, comme montré sur la figure 14. Pour cela, alors que le coulisseau 270 est en position d'autorisation, le verrou 250 est toujours à la hauteur initiale. Alors, le technicien a la possibilité de faire basculer le système de consignation en configuration de consignation, en passant d'abord par la configuration intermédiaire, en actionnant le verrou 250, via la partie externe 251 saillante au travers de la face 11 du boîtier 1.

Pour passer de la configuration de fonctionnement à la configuration intermédiaire, alors que le coulisseau 270 est dans la position d'autorisation montrée sur la figure 14, le technicien tire sur la partie externe 251 du verrou 250, pour faire coulisser le verrou 250 par rapport au coulisseau 270, de la hauteur initiale à la hauteur de consignation, et le coulisseau 270 par rapport au boîtier de la position d'autorisation jusqu'à la position de retenue. Une fois que la hauteur de consignation est atteinte, le verrou 250 est en butée axiale contre le coulisseau 270 en sens opposé de la direction Y, par mis en butée du doigt 253 du verrou 250, en sens opposé de la direction Y, contre l'extrémité de la rainure axiale 274 du verrou débouchant dans la gorge 273. Le coulisseau 270 est lui-même retenu à la position de retenue, soit par les commutateurs 23 eux-mêmes, soit, de préférence, par une butée axiale prévue sur le boîtier 1. Lorsque le coulisseau 270 a atteint la position de retenue et que le verrou 250 est toujours dans l'orientation de déconsignation, le système de consignation a atteint la configuration intermédiaire montrée sur la figure 15.

Pour atteindre la configuration intermédiaire, le technicien a tiré sur le verrou 250 à l'encontre des efforts élastiques fournis par les ressorts 278 et 279. Pour ensuite passer à la configuration de consignation montrée sur la figure 16, le technicien pivote le verrou 250 de l'orientation de déconsignation jusqu'à l'orientation de consignation, tout en maintient le verrou 250 à la hauteur de consignation à l'encontre des efforts élastiques fournis par les ressorts 278 et 279. Une fois l'orientation de consignation atteinte, le verrou 250 est maintenu dans la position de consignation par mise en butée axiale des butées 259 et 218

Pour revenir en configuration de fonctionnement à partir de la configuration de déconsignation, le technicien fait d'abord revenir le système de consignation en configuration intermédiaire en pivotant le verrou de l'orientation de consignation à l'orientation de déconsignation, obtenant ainsi la configuration intermédiaire montrée sur la figure 15.

Lorsque le système de consignation est dans la configuration intermédiaire et que le technicien relâche le verrou 250, le coulisseau 270 revient en position d'autorisation par rapport au boîtier 1 sous l'action du ressort de coulisseau 277, si les commutateurs 23 sont en configuration d'isolement, et le verrou 250 revient à la hauteur initiale sous l'action du ressort de verrou 278. Le système de consignation est alors revenu en configuration de fonctionnement.

On prévoit avantageusement que le verrou 250 actionne mécaniquement l'appareil 40 sans pièce intermédiaire, comme montré aux figures 13 à 16. Pour cela, le verrou 250 comprend avantageusement une rampe 256, formée sur la partie interne 252.

Comme montré sur les figures 15 et 16, lorsque le verrou 250 est à la hauteur de consignation et le coulisseau 270 en position d'autorisation, une partie de la rampe 256 formant une came est à hauteur de la commande 44 suivant l'axe Y1. En revanche, en configuration de fonctionnement, la partie de la rampe 256 formant la came est axialement décalée de la commande 44.

Lorsque le verrou 250 est dans l'orientation de déconsignation dans la configuration de fonctionnement, comme montré sur les figures 13 et 14, une partie axiale de la rampe 256 avec un rayon relativement faible par rapport à l'axe Y1 est en contact avec la commande 44 sans l'enfoncer, ou n'est pas en contact avec la commande 44. Alors, la rampe 256 n'actionne pas la commande 44. Lorsque le verrou 250 est dans l'orientation de déconsignation dans la configuration intermédiaire, comme montré sur les figure 13 à 15, la partie de la rampe 256 formant la came est à hauteur de la commande 44. Toutefois, dans l'orientation de déconsignation, c'est une partie de la came avec un rayon relativement faible par rapport à l'axe Y1 qui est en contact avec la commande 44, de sorte que la commande 44 n'est pas enfoncée par la rampe 256. Autrement dit, la rampe 256 n'actionne pas la commande mécanique 44 lorsque le système de consignation est en configuration intermédiaire. Lorsqu'elle n'est pas actionnée par la rampe 256, la commande 44 prend librement la position correspondant à la configuration de conduction de l'appareil 40, par exemple sous l'action du ressort interne de l'appareil 40.

Comme montré sur la figure 16, alors que le verrou 250 est dans l'orientation de consignation, la partie de la rampe 256 formant la came est tournée de façon à appuyer contre la commande 44, radialement vers l'extérieur, notamment contre l'action du ressort interne de l'appareil 40 s'il est prévu. La commande 44 étant ainsi actionnée par la rampe 256 du verrou 250, l'appareil 40 est en configuration d'isolement.

Le verrou 250 comprend avantageusement un orifice de consignation 255, qui est formé au travers de la partie externe 251 du verrou 250, et qui est conçu pour recevoir un cadenas, visant à verrouiller le système de consignation en configuration de consignation.

Dans le mode de réalisation des figures 13 à 17, la face 11 du boîtier 1 constitue un système de masquage de l'orifice 255. En effet, en configuration de fonctionnement, la face 11 masque l'orifice de consignation 255, en ce la partie externe 251 du verrou 250 est escamotée à l'intérieur du boîtier 1. Alors, le technicien n'a pas la possibilité d'installer le cadenas sur l'orifice de consignation 255. En configuration de consignation, l'orifice de consignation 255 dépasse hors du boîtier 1 par-delà la face 11, laquelle autorise donc l'orifice 255 à recevoir le cadenas.

Une fois le cadenas en place dans l'orifice de consignation 255, le cadenas maintient le verrou 250 à la hauteur de consignation, le verrou 250 maintenant le coulisseau 270 en position de retenue. Le cadenas étant en place, les commutateurs 23 sont maintenus en configuration d'isolement.

## Revendications

1. Unité de protection (140) qui est conçue pour raccorder électriquement une alimentation électrique (124) à des unités de contrôle-commande (138) d'une armoire électrique (100), l'unité de protection (140) comprenant un boîtier (1) et au moins un appareil de commutation de puissance (20), qui est disposé dans le boîtier (1) et qui comprend :
- une entrée de puissance (21), configurée pour être électriquement connectée à l'alimentation électrique (124) ;
- une sortie de puissance (22), destinée à être électriquement connectée aux unités de contrôle-commande (138) ;et
- un commutateur mécanique (23), qui évolue entre une configuration de conduction, où le commutateur mécanique (23) relie électriquement la sortie de puissance (22) à l'entrée de puissance (21), et une configuration d'isolement, où le commutateur mécanique (23) isole électriquement la sortie de puissance (22) de l'entrée de puissance (21) ;
et ledit au moins un appareil de commutation de puissance (20) comprend ur électro-actionneur (28), qui est configuré pour actionner le commutateur mécanique (23) entre la configuration de conduction et la configuration d'isolement et l'unité de protection (140) comprend en outre :
- une unité de commande électronique (30), qui est disposée dans le boîtier (1) et qui est configurée pour commander ledit au moins un appareil de commutation de puissance (20), en commandant électriquement l'électro-actionneur (28) ;
- un appareil de commutation auxiliaire (40), qui est disposé dans le boîtier (1) et qui comprend une entrée auxiliaire (42), pour être électriquement connecté à l'alimentation électrique (124), une sortie auxiliaire (43), pour être électriquement connecté à l'unité de commande électronique (30), et une commande mécanique (44), pour faire basculer l'appareil de commutation auxiliaire (40) entre une configuration de conduction, où la sortie auxiliaire (43) est électriquement reliée à l'entrée auxiliaire (42), et une configuration d'isolement, où la sortie auxiliaire (43) est électriquement isolée de l'entrée auxiliaire (42) ; et
- un système de consignation, qui comprend un verrou (50; 250), qui est mobile par rapport au boîtier (1), le système de consignation étant configuré pour évoluer entre :
• une configuration de consignation, dans laquelle le verrou (50; 250) est positionné dans une position de consignation et maintient mécaniquement le commutateur mécanique (23) dudit au moins un appareil de commutation de puissance (20) en configuration d'isolement et maintient mécaniquement l'appareil de commutation auxiliaire (40) en configuration d'isolement ; et
• une configuration de fonctionnement, dans laquelle le verrou (50; 250) est positionné de façon à autoriser le commutateur mécanique (23) dudit au moins un appareil de commutation de puissance (20) à évoluer entre la configuration d'isolement et la configuration de conduction et autorise l'appareil de commutation auxiliaire (40) à évoluer entre la configuration de conduction et la configuration d'isolement.

2. Unité de protection (140) selon la revendication 1, dans laquelle, en configuration de fonctionnement, ledit au moins un appareil de commutation de puissance (20) empêche mécaniquement le verrou (50; 250) d'être mis en position de consignation, lorsque le commutateur mécanique (23) est en configuration de conduction, et autorise mécaniquement le verrou (50; 250) à être mis en position de consignation, lorsque le commutateur mécanique (23) est en configuration d'isolement.

3. Unité de protection (140) selon l'une quelconque des revendications 1 ou 2, dans laquelle :
- le système de consignation comprend un coulisseau (70; 270), qui est disposé dans le boîtier (1) et qui est coulissant par rapport au boîtier (1) suivant un axe principal (Y1) fixe par rapport au boîtier (1) ;
- en configuration de consignation, pour maintenir mécaniquement le commutateur mécanique (23) dudit au moins un appareil de commutation de puissance (20) en configuration d'isolement, le verrou (50; 250) maintient le coulisseau (70; 270) dans une position de retenue par rapport au boîtier (1), dans laquelle le coulisseau (70; 270) maintenant mécaniquement le commutateur mécanique (23) en configuration d'isolement ; et
- en configuration de fonctionnement, le coulisseau (70; 270) est entraîné par le commutateur mécanique (23) dudit au moins un appareil de commutation de puissance (20), entre :
• une position d'empêchement, lorsque le commutateur mécanique (23) est en configuration de conduction, où le verrou (50; 250) est empêché d'être mis en position de consignation, et
• une position d'autorisation, lorsque le commutateur mécanique (23) est en configuration d'isolement, où le verrou (50; 250) est autorisé à être mis en position de consignation.

4. Unité de protection (140) selon la revendication 3, dans laquelle :
- le verrou (50; 250) est pivotant par rapport au coulisseau (70; 270) autour de l'axe principal (Y1), entre une orientation de consignation, lorsque le verrou (50; 250) est en position de consignation, et une orientation de déconsignation, adoptée en configuration de fonctionnement ;
- le coulisseau (70; 270) et le verrou (50; 250) comprennent des butées axiales (53, 73 ; 253, 276), qui sont disposées de sorte à :
• être en regard l'une de l'autre parallèlement à l'axe principal (Y1) lorsque le verrou (50; 250) est dans la position de consignation, pour que, en configuration de consignation, le verrou (50; 250) retienne le coulisseau (70; 270) en position de retenue par mise en butée des butées axiales (53, 73 ; 253, 276) ainsi en regard ; et
• être décalées l'une par rapport à l'autre autour de l'axe principal (Y1) lorsque le verrou (50; 250) est dans l'orientation de déconsignation, pour que, en configuration de fonctionnement, le verrou (50; 250) autorise le coulisseau (70; 270) à être déplacé entre la position d'empêchement et la position d'autorisation.

5. Unité de protection (140) selon la revendication 4, dans laquelle le verrou (50; 250) et le coulisseau (70; 270) comprennent des butées de rotation (54, 74 ; 253, 274), qui sont disposées de sorte à :
- être à même hauteur le long de l'axe principal (Y1), lorsque le système de consignation est en configuration de fonctionnement avec le coulisseau (70; 270) en position d'empêchement, pour que le coulisseau (70; 270) maintienne le verrou (50; 250) dans l'orientation de déconsignation par mise en butée des butées de rotation (54, 74 ; 253, 274) ; et
- être à hauteur différente le long de l'axe principal (Y1), lorsque le système de consignation est en configuration de consignation, pour que le coulisseau (70; 270) autorise le verrou (50; 250) à être pivoté entre l'orientation de consignation et l'orientation de déconsignation.

6. Unité de protection (140) selon l'une quelconque des revendications 4 ou 5, dans laquelle le verrou (50; 250) est fixe en translation suivant l'axe principal (Y1), par rapport au boîtier (1).

7. Unité de protection (140) selon l'une quelconque des revendications 3 à 6, dans laquelle le système de consignation comprend un ressort de coulisseau (277), qui exerce un effort élastique sur le coulisseau (70; 270), en prenant appui sur le boîtier (1), tendant à déplacer le coulisseau (70; 270) vers la position d'empêchement, lorsque le coulisseau (70; 270) est en position de retenue.

8. Unité de protection (140) selon l'une quelconque des revendications précédentes, dans laquelle le verrou (50; 250) comprend une rampe (56; 256), qui est configurée pour actionner la commande mécanique (44) de l'appareil de commutation auxiliaire (40), pour mettre l'appareil de commutation auxiliaire (40) en configuration d'isolement, lorsque le verrou (50; 250) est en position de consignation et qui est configurée pour ne pas actionner la commande mécanique (44) lorsque le système de consignation est en configuration de fonctionnement.

9. Unité de protection (140) selon l'une quelconque des revendications précédentes, dans laquelle le verrou (50; 250) comprend un orifice de consignation (55; 255) et le système de consignation comprend un système de masquage (62; 11), qui est configuré pour :
- autoriser l'orifice de consignation (55; 255) à recevoir un cadenas (61), lorsque le système de consignation est en configuration de consignation ; et
- masquer l'orifice de consignation (55; 255) lorsque le système de consignation est en configuration de fonctionnement, pour empêcher l'orifice de consignation (55; 255) de recevoir le cadenas (61).

10. Armoire électrique (100), comprenant :
- l'unité de protection (140) selon l'une quelconque des revendications précédentes ; et
- les unités de contrôle-commande (138), raccordées électriquement à la sortie de puissance (22) dudit au moins un appareil de commutation de puissance (20).

## Patentansprüche

1. Schutzeinheit (140), die
zum elektrischen Verbinden einer Stromversorgung (124) mit Steuer- und Regeleinheiten (138) eines Schaltschranks (100) konzipiert ist, die Schutzeinheit (140) umfassend ein Gehäuse (1) und mindestens ein Leistungsschaltgerät (20) umfasst, das in dem Gehäuse (1) angeordnet ist und das Folgendes umfasst:
- einen Leistungseingang (21), der konfiguriert ist, um elektrisch mit der Stromversorgung (124) verbunden zu werden;
- einen Leistungsausgang (22), der dazu bestimmt ist, elektrisch mit den Steuer- und Regeleinheiten (138) verbunden zu werden; und
- einen mechanischen Schalter (23), der sich zwischen einer leitenden Konfiguration, in der der mechanische Schalter (23) den Leistungsausgang (22) elektrisch mit dem Leistungseingang (21) verbindet, und einer isolierenden Konfiguration, in der der mechanische Schalter (23) den Leistungsausgang (22) elektrisch von dem Leistungseingang (21) isoliert, bewegt;
und wobei das mindestens eine Leistungsschaltgerät (20) einen Elektro-Aktuator (28) umfasst, der konfiguriert ist, um den mechanischen Schalter (23) zwischen der leitenden Konfiguration und der isolierenden Konfiguration zu betätigt, und die Schutzeinheit (140) ferner Folgendes umfasst:
- eine elektronische Steuereinheit (30), die in dem Gehäuse (1) angeordnet und konfiguriert ist, um das mindestens eine Leistungsschaltgerät (20) zu steuern, indem sie den Elektro-Aktuator (28) elektrisch steuert;
- ein Hilfsschaltgerät (40), das in dem Gehäuse (1) angeordnet ist und das einen Hilfseingang (42), um elektrisch mit der Stromversorgung (124) verbunden zu sein, einen Hilfsausgang (43), um elektrisch mit der elektronischen Steuereinheit (30) verbunden zu sein, und eine mechanische Steuerung (44) zum Umschalten des Hilfsschaltgeräts (40) zwischen einer leitenden Konfiguration, bei der der Hilfsausgang (43) elektrisch mit dem Hilfseingang (42) verbunden ist, und einer isolierenden Konfiguration, bei der der Hilfsausgang (43) elektrisch von dem Hilfseingang (42) isoliert ist, umfasst; und
- ein Verriegelungssystem, umfassend einen Riegel (50; 250), der in Bezug auf das Gehäuse (1) bewegbar ist, wobei das Verriegelungssystem konfiguriert ist, um sich zwischen Folgendem zu bewegen:
• einer Verriegelungskonfiguration, in der der Riegel (50; 250) in einer Verriegelungsposition positioniert ist und den mechanischen Schalter (23) des mindestens einen Leistungsschaltgeräts (20) mechanisch in einer isolierenden Konfiguration hält und das Hilfsschaltgerät (40) mechanisch in einer isolierenden Konfiguration hält; und
• einer Betriebskonfiguration, in der der Riegel (50; 250) positioniert ist, um es dem mechanischen Schalter (23) des mindestens einen Leistungsschaltgeräts (20) zu ermöglichen, sich zwischen der isolierenden Konfiguration und der leitenden Konfiguration zu bewegen, und es dem Hilfsschaltgerät (40) zu ermöglichen, sich zwischen der leitenden Konfiguration und der isolierenden Konfiguration zu bewegen.

2. Schutzeinheit (140) nach Anspruch 1, wobei das mindestens eine Leistungsschaltgerät (20) in der Betriebskonfiguration mechanisch verhindert, dass der Riegel (50; 250) in Verriegelungsposition gebracht wird, wenn der mechanische Schalter (23) in der leitenden Konfiguration ist, und mechanisch zulässt, dass der Riegel (50; 250) in Verriegelungsposition gebracht wird, wenn der mechanische Schalter (23) in der isolierenden Konfiguration ist.

3. Schutzeinheit (140) nach einem der Ansprüche 1 oder 2, wobei:
- das Verriegelungssystem einen Schieber (70; 270) umfasst, der in dem Gehäuse (1) angeordnet ist und der in Bezug auf das Gehäuse (1) entlang einer Hauptachse (Y1), die in Bezug auf das Gehäuse (1) feststehend ist, verschiebbar ist;
- der Riegel (50; 250) den Schieber (70; 270) in einer Verriegelungskonfiguration in einer Halteposition in Bezug auf das Gehäuse (1) hält, um den mechanischen Schalter (23) des mindestens einen Leistungsschaltgeräts (20) mechanisch in einer isolierenden Konfiguration zu halten, wobei der Schieber (70; 270) den mechanischen Schalter (23) mechanisch in der isolierenden Konfiguration hält; und
- der Schieber (70; 270) durch den mechanischen Schalter (23) des mindestens einen Leistungsschaltgeräts (20) in der Betriebskonfiguration angetrieben wird zwischen:
• einer Sperrposition, wenn der mechanische Schalter (23) in der leitenden Konfiguration ist, in der der Riegel (50; 250) daran gehindert wird, in die Verriegelungsposition gebracht zu werden, und
• einer Freigabeposition, wenn der mechanische Schalter (23) in der isolierenden Konfiguration ist, in der es dem Schloss (50; 250) erlaubt ist, in die Verriegelungsposition gebracht zu werden.

4. Schutzeinheit (140) nach Anspruch 3, wobei:
- der Riegel (50; 250) in Bezug auf den Schieber (70; 270) um die Hauptachse (Y1) zwischen einer Verriegelungsausrichtung, wenn der Riegel (50; 250) in der Verriegelungsposition ist, und einer Entriegelungsausrichtung, die in der Betriebskonfiguration eingenommen wird, schwenkbar ist;
- der Schieber (70; 270) und der Riegel (50; 250) axiale Anschläge (53, 73; 253, 276) umfassen, die angeordnet sind, um:
• einander parallel zu der Hauptachse (Y1) gegenüber zu sein, wenn der Riegel (50; 250) in der Verriegelungsposition ist, damit der Riegel (50; 250) den Schieber (70; 270) in der Verriegelungskonfiguration in der Halteposition hält, indem die gegenüberliegenden axialen Anschläge (53, 73; 253, 276) aneinander anliegen; und
• um die Hauptachse (Y1) gegeneinander verschoben sind, wenn der Riegel (50; 250) in der Freigabeausrichtung ist, sodass der Riegel (50; 250) in der Betriebskonfiguration zulässt, dass der Schieber (70; 270) zwischen der Sperrposition und der Freigabeposition bewegt wird.

5. Schutzeinheit (140) nach Anspruch 4, wobei der Riegel (50; 250) und der Schieber (70; 270) Drehanschläge (54, 74; 253, 274) umfassen, die angeordnet sind, um:
- auf der gleichen Höhe entlang der Hauptachse (Y1) zu sein, wenn das Verriegelungssystem in der Betriebskonfiguration mit dem Schieber (70; 270) in der Sperrposition ist, sodass der Schieber (70; 270) den Riegel (50; 250) in der Verriegelungsausrichtung durch Anliegen der Drehanschläge (54, 74; 253, 274) hält; und
- entlang der Hauptachse (Y1) auf einer unterschiedlichen Höhe zu sein, wenn das Verriegelungssystem in der Verriegelungskonfiguration ist, sodass der Schieber (70; 270) es dem Riegel (50; 250) ermöglicht, zwischen der Verriegelungs- und der Entriegelungsungsausrichtung geschwenkt zu werden.

6. Schutzeinheit (140) nach einem der Ansprüche 4 oder 5, wobei der Riegel (50; 250) in Bezug auf das Gehäuse (1) entlang der Hauptachse (Y1) translatorisch feststehend ist.

7. Schutzeinheit (140) nach einem der Ansprüche 3 bis 6, wobei das Verriegelungssystem eine Schieberfeder (277) umfasst, die eine elastische Kraft auf den Schieber (70; 270) ausübt, indem sie sich an dem Gehäuse (1) abstützt und dazu neigt, den Schieber (70; 270) in die Sperrposition zu bewegen, wenn der Schieber (70; 270) in Halteposition ist.

8. Schutzeinheit (140) nach einem der vorherigen Ansprüche, wobei der Riegel (50; 250) eine Rampe (56; 256) umfasst, die konfiguriert ist, um die mechanische Steuerung (44) des Hilfsschaltgeräts (40) zu betätigen, um das Hilfsschaltgerät (40) in eine isolierende Konfiguration zu bringen, wenn der Riegel (50; 250) in einer Verriegelungsposition ist, und die konfiguriert ist, um die mechanische Steuerung (44) nicht zu betätigen, wenn das Verriegelungssystem in einer Betriebskonfiguration ist.

9. Schutzeinheit (140) nach einem der vorherigen Ansprüche, wobei der Riegel (50; 250) eine Verriegelungsöffnung (55; 255) umfasst und das Verriegelungssystem ein Maskierungssystem (62; 11) umfasst, das zu Folgendem konfiguriert ist:
- Ermöglichen, dass die Verriegelungsöffnung (55; 255) ein Vorhängeschloss (61) aufnimmt, wenn das Verriegelungssystem in der Verriegelungskonfiguration ist; und
- Abdecken der Verriegelungsöffnung (55; 255), wenn das Verriegelungssystem in der Betriebskonfiguration ist, um zu verhindern, dass die Verriegelungsöffnung (55; 255) das Vorhängeschloss (61) aufnimmt.

10. Schaltschrank (100), umfassend:
- die Schutzeinheit (140) nach einem der vorherigen Ansprüche; und
- die Steuer- und Regeleinheiten (138), die elektrisch mit dem Leistungsausgang (22) des mindestens einen Leistungsschaltgeräts (20) verbunden sind.

## Claims

1. A protection unit (140) which
is
designed to electrically connect an electrical supply (124) to control units (138) of an electrical cabinet (100), the protection unit (140) comprising a housing (1) and at least one power switching device (20), which is arranged in the housing (1) and which comprises:
- a power input (21), configured to be electrically connected to the electrical supply (124);
- a power output (22) for electrical connection to the control units (138); and
- a mechanical switch (23), which shifts between a conduction configuration, where the mechanical switch (23) electrically connects the power output (22) to the power input (21), and an isolation configuration, where the mechanical switch (23) electrically isolates the power output (22) from the power input (21);
and said at least one power switching apparatus (20) comprises an electro-actuator (28), which is configured to actuate the mechanical switch (23) between the conduction configuration and the isolation configuration and the protection unit (140) further comprises:
- an electronic control unit (30), which is arranged in the housing (1) and which is configured to control said at least one power switching device (20), by electrically controlling the electro-actuator (28);
- an auxiliary switching device (40), which is arranged in the housing (1) and which comprises an auxiliary input (42), for being electrically connected to the electrical supply (124), an auxiliary output (43), for being electrically connected to the electronic control unit (30), and a mechanical control (44), to switch the auxiliary switching device (40) between a conduction configuration, where the auxiliary output (43) is electrically connected to the auxiliary input (42), and an isolation configuration, where the auxiliary output (43) is electrically isolated from the auxiliary input (42); and
- a lockout system comprising a latch (50; 250) that is movable relative to the housing (1), the lockout system being configured to shift between:
• a lockout configuration, wherein the latch (50; 250) is positioned in a lockout position and mechanically holds the mechanical switch (23) of said at least one power switching device (20) in an isolated configuration and mechanically holds the auxiliary switching device (40) in an isolated configuration; and
• an operating configuration, wherein the latch (50; 250) is positioned so as to allow the mechanical switch (23) of said at least one power switching device (20) to shift between the isolation configuration and the conduction configuration and allows the auxiliary switching device (40) to shift between the conduction configuration and the isolation configuration.

2. The protection unit (140) according to claim 1, wherein, in the operating configuration, said at least one power switching apparatus (20) mechanically prevents the latch (50; 250) from being put in the lockout position, when the mechanical switch (23) is in the conduction configuration, and mechanically allows the latch (50; 250) to be put in the lockout position, when the mechanical switch (23) is in the isolation configuration.

3. The protection unit (140) according to any one of the claims 1 or 2, wherein:
- the lockout system comprises a slide (70; 270), which is arranged in the housing (1) and is slidable relative to the housing (1) along a main axis (Y1) that is fixed relative to the housing (1);
- in the lockout configuration, to mechanically hold the mechanical switch (23) of said at least one power switching device (20) in the isolation configuration, the latch (50; 250) holds the slide (70; 270) in a retaining position relative to the housing (1), wherein the slide (70; 270) mechanically holds the mechanical switch (23) in the isolation configuration; and
- in the operating configuration, the slide (70; 270) is driven by the mechanical switch (23) of said at least one power switching device (20), between:
• a prevention position, when the mechanical switch (23) is in the conduction configuration, where the latch (50; 250) is prevented from being moved into the lockout position, and
• an allowing position, when the mechanical switch (23) is in the isolation configuration, where the latch (50; 250) is allowed to be moved to the lockout position.

4. The protection unit (140) according to claim 3, wherein:
- the latch (50; 250) pivots relative to the slide (70; 270) about the main axis (Y1), between a locking orientation, when the latch (50; 250) is in the locking position, and a release orientation, adopted in the operating configuration;
- the slide (70; 270) and the latch (50; 250) comprise axial stops (53, 73; 253, 276), which are arranged so as to:
• face each other parallel to the main axis (Y1) when the latch (50; 250) is in the locking position, so that, in the locking configuration, the latch (50; 250) holds the slide (70; 270) in the retaining position by bringing the axial stops (53, 73; 253, 276) into abutment and thus facing each other; and
• be offset relative to each other about the main axis (Y1) when the latch (50; 250) is in the release orientation, so that, in the operating configuration, the latch (50; 250) allows the slide (70; 270) to be moved between the prevention position and the allowing position.

5. The protection unit (140) according to claim 4, wherein the latch (50; 250) and the slide (70; 270) comprise rotation stops (54, 74; 253, 274), which are arranged so as to:
- be at the same height along the main axis (Y1), when the lockout system is in the operating configuration with the slide (70; 270) in the blocking position, so that the slide (70; 270) holds the latch (50; 250) in the unlocking orientation by bringing the rotation stops (54, 74; 253, 274) into abutment; and
- be at different heights along the main axis (Y1), when the lockout system is in the lockout configuration, so that the slide (70; 270) allows the latch (50; 250) to be pivoted between the lockout orientation and the unlocking orientation.

6. The protection unit (140) according to any one of claims 4 or 5, wherein the latch (50; 250) is fixed in translation along the main axis (Y1), relative to the housing (1).

7. The protection unit (140) according to any one of claims 3 to 6, wherein the locking system comprises a slide spring (277), which exerts a resilient force on the slide (70; 270), by bearing on the housing (1), tending to move the slide (70; 270) towards the prevention position, when the slide (70; 270) is in the retention position.

8. The protection unit (140) according to any one of the preceding claims, wherein the latch (50; 250) comprises a ramp (56; 256), which is configured to actuate the mechanical control (44) of the auxiliary switching device (40), to put the auxiliary switching device (40) in an isolation configuration, when the latch (50; 250) is in a lockout position and which is configured not to actuate the mechanical control (44) when the lockout system is in an operating configuration.

9. The protection unit (140) according to any one of the preceding claims, wherein the latch (50; 250) comprises a lockout orifice (55; 255) and the lockout system comprises a masking system (62; 11), which is configured to:
- allowing the lockout orifice (55; 255) to receive a padlock (61), when the lockout system is in the lockout configuration; and
- masking the lockout orifice (55; 255) when the lockout system is in the operating configuration, to prevent the lockout orifice (55; 255) from receiving the padlock (61).

10. An electrical cabinet (100), comprising:
- the protection unit (140) according to any of the preceding claims; and
- control units (138), electrically connected to the power output (22) of said at least one power switching device (20).
